(19) Europäisches Patentamt
European Patent Office
Office européen des brevets

(11) EP 3 211 999 B1

(12) **FASCICULE DE BREVET EUROPEEN**

(45) Date de publication et mention de la délivrance du brevet:
**27.11.2019 Bulletin 2019/48**

(21) Numéro de dépôt: **15797139.1**

(22) Date de dépôt: **30.10.2015**

(51) Int Cl.:
*A01N 55/02* $^{(2006.01)}$ *C07F 9/94* $^{(2006.01)}$
*A01P 1/00* $^{(2006.01)}$ *A01N 55/00* $^{(2006.01)}$

(86) Numéro de dépôt international:
**PCT/FR2015/052932**

(87) Numéro de publication internationale:
**WO 2016/066974 (06.05.2016 Gazette 2016/18)**

# (54) UTILISATION DU SOUS-SALICYLATE DE BISMUTH OU DE L'UN DE SES DÉRIVÉS EN TANT QU'AGENT PHYTOPHARMACEUTIQUE

VERWENDUNG VON WISMUTSUBSALICYLAT ODER EINEM DERIVAT DAVON ALS PHYTOPHARMAKON

USE OF BISMUTH SUBSALICYLATE OR ONE OF THE DERIVATIVES THEREOF AS A PHYTOPHARMACEUTICAL AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2014 FR 1460451**

(43) Date de publication de la demande:
**06.09.2017 Bulletin 2017/36**

(73) Titulaire: **Université de Haute-Alsace**
**68093 Mulhouse Cedex (FR)**

(72) Inventeurs:
- **BERTSCH, Christophe**
  **F-68770 Ammerschwihr (FR)**
- **ALBRECHT, Sébastien**
  **F-68100 Mulhouse (FR)**
- **TARNUS, Céline**
  **F-68170 Rixheim (FR)**
- **GELLON, Mélanie**
  **F-68000 Colmar (FR)**

(74) Mandataire: **Cabinet Becker et Associés**
**25, rue Louis le Grand**
**75002 Paris (FR)**

(56) Documents cités:
**US-A- 3 239 411 US-A- 3 893 936**
**US-A- 4 324 799**

- **LUCANSKA BRIGITA ET AL: "Fungicidal activity of some alkyl- and arylcarboxylatocopper(II) complexes", ACTA FACULTATIS PHARMACEUTICAE UNIVERSITATIS COMENIANAE, COMENIUS UNIV., BRATISLAVA, CZ, vol. 24, 1 janvier 1973 (1973-01-01), pages 29-51, XP009182782, ISSN: 0301-2298**
- **DANA B F ET AL: "Experiments in control of white mold of beans by fungicides applied as dusts and sprays", PLANT DISEASE REPORTER, WASHINGTON, DC, US, vol. 34, no. 1, 15 janvier 1950 (1950-01-15), pages 8-14, XP009182814, ISSN: 0032-0811**
- **DATABASE CA [Online] CHEMICAL ABSTRACTS SERVICE, COLUMBUS, OHIO, US; 1943, CLAYTON, E. E. ET AL: "Fungicidal tests on blue mold (Peronospora tabacina) of tobacco", XP002736453, extrait de STN Database accession no. 37:26035 & CLAYTON, E. E. ET AL: "Fungicidal tests on blue mold (Peronospora tabacina) of tobacco", JOURNAL OF AGRICULTURAL RESEARCH (WASHINGTON, D. C.) , 66, 261-76 CODEN: JAGRAC; ISSN: 0095-9758, 1943,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

L'invention se rapporte au domaine phytopharmaceutique ou phytosanitaire, en particulier à la prévention et à la lutte des maladies cryptogamiques des végétaux, notamment celles touchant les vignes et les arbres fruitiers.

### ARRIERE-PLAN TECHNOLOGIQUE

La lutte et la prévention des maladies cryptogamiques est un enjeu majeur en agriculture, en particulier dans le domaine viticole et arboricole. Il existe différents types de maladies cryptogamiques telles que l'oïdium, la pourriture grise, et les maladies du bois qui regroupent l'esca, les Botrysphaeria dieback (c'est-à-dire les maladies de dépérissement à Botryosphaeria telles que le Black Dead Arm), l'eutypiose, l'anthracnose, ou encore l'excoriose.

Les maladies du bois, sont particulièrement dommageables pour la pérennité du patrimoine viticole. Les parasites responsables de ces maladies provoquent à plus ou moins long terme la mort du cep et peuvent nécessiter un renouvellement des plants pouvant atteindre plus de 10% d'un vignoble.

Depuis environ une dizaine d'années, on constate une progression inquiétante de ces maladies qui sont devenues l'objet de préoccupations majeures de la filière viti-vinicole. En effet, le vignoble mondial est atteint. En France, toutes les régions viticoles sont touchées et actuellement environ 13% du vignoble français est improductif, principalement à cause de ces maladies de dépérissement. Plusieurs observations laissent à penser que l'épidémie n'est qu'en début de cycle : i) l'interdiction de l'arsénite de sodium, seul moyen efficace connu à ce jour pour combattre l'esca et le Black Dead Arm (BDA), à partir de 2001, ii) l'augmentation annuelle du taux de mortalité de 4 à 5 % à partir de la cinquième année suivant l'arrêt du traitement par l'arsénite de soude et iii) le taux élevé de ceps asymptomatiques contaminés dans le vignoble.

En effet, le développement de cette épidémie a été favorisé par l'interdiction de l'arsénite de sodium en 2001, dans tous les pays viticoles, en raison de sa toxicité. Cette interdiction inquiète d'autant plus les viticulteurs qu'aucune méthode alternative, efficace et viable, n'a été proposée à ce jour. Ceci met en péril le maintien de l'outil de production et sa longévité et cela à l'échelle mondiale. Par conséquent, les effets de ces maladies du bois seront nombreux à moyen terme : elles entraîneront soit une dépréciation de la qualité des vins suite à un rajeunissement des parcelles, soit une perte de la typicité d'un vin d'une région viticole suite à la non replantation des cépages les plus sensibles.

Les maladies du bois affectant le vignoble regroupent eutypiose, l'esca, et certaines maladies de dépérissement à Botrysphaeria telles que le Black Dead Arm (BDA). Ces maladies sont associées à la présence de différents champignons capables de dégrader les tissus ligneux. Les principales espèces isolées associées à ces maladies sont *Phaeomoniella chlamydospora, Phaeoacremonium aleophilum, Eutypa lata, Fomitiporia mediterranea, Diplodia seriata , Neofusicoccum parvum* et *Botryosphaeria stevensii.* D'autres espèces sont en cours d'identification.

Ces maladies s'expriment au niveau du bois par la formation de nécroses sectorielles et/ou centrales, par la présence de bandes brunes ou de chancres dans le tronc et les bras et au niveau foliaire par des décolorations et des dessèchements qui peuvent être foudroyants.

Les maladies du bois peuvent provoquer également un rabougrissement des rameaux et des symptômes au niveau des fruits tels que des retards de maturation, un flétrissement ou la présence de taches noires-violacées à la surface des fruits. L'eutypiose, dont l'agent pathogène principal est *E. lata,* touche non seulement les vignobles mais également les arbres fruitiers tels que les pruniers, les poiriers, les pommiers, les abricotiers ou encore les cerisiers et certains arbres forestiers

Depuis l'interdiction de l'arsenite de sodium en raison de sa forte toxicité, des recherches ont été engagées dans plusieurs pays du monde afin d'identifier des solutions alternatives à son utilisation. Il a été ainsi proposé l'utilisation combinée du cyproconazole et de la carbendazime pour prévenir les infections par *Eutypa lata.* Cette combinaison commercialisée sous le nom d'Atemicep® en France a été retirée du marché en raison de sa phytotoxicité. Un autre produit phytosanitaire associant le flusilazole et la carbendazime et homologué pour l'esca a été également retiré du marché en raison de sa toxicité en 2007. D'autres traitements chimiques sont décrits dans Bertsch et al., Plant Pathology, 2013,62, 243-265.

Les recherches se concentrent, à présent, sur la découverte de solutions alternatives à l'utilisation d'agents chimiques. Ainsi, le biofongicide ESQUIVE®WP, commercialisé par Bayer, vient d'être homologué contre l'esca, le Black Dead Arm et l'eutypiose de la vigne. Ce produit phytopharmaceutique repose sur l'utilisation d'un champignon, à savoir la souche I-1237 de *Trichoderma atroviride.* Ce champignon présente une activité antagoniste et d'hyperparasitisme qui préviendrait le développement des principaux phytopathogènes impliqués dans ces maladies. Ce biofongicide doit être appliqué, au moment de la taille, uniquement à titre prophylactique, par badigeonnage ou pulvérisation. L'efficacité d'ESQUIVE® WP étant partielle et la démonstration au champ n'étant pas tout à fait établie, il est recommandé d'accompagner son utilisation de mesures culturales prophylactiques.

Des nouvelles pratiques ont été également mises au point pour éviter la propagation des maladies du bois lors de la production des plants en pépinière. Certains pépiniéristes traitent le matériel de propagation à l'eau chaude ou dans des bains de bénomyle, de captane ou de chlorure de didécylméthylammonium. Ces traitements permettraient de réduire l'incidence de certains pathogènes impliqués dans les maladies du bois. L'efficacité de ces méthodes vis-à-vis de la protection des plants de vigne demeure controversée.

Les maladies cryptogamiques affectent également bien d'autres espèces végétales d'intérêt agricole, en particulier les cultures céréalières, crucifères, fruitières et légumières, ainsi que les produits issus de ces cultures. Dana et al. (Plant Disease Reporter, 1950, vol.34, 8-14) décrit l'évaluation de différents composés, notamment le sous-salicylate de bismuth, dans le traitement de la moisissure blanche du haricot causée par *Sclerotinia sclerotiorum.*

Il persiste de nos jours un besoin de nouveaux agents phytopharmaceutiques, respectueux de l'environnement, pour la prévention et le traitement des maladies cryptogamiques chez les plantes.

**RESUME DE L'INVENTION**

L'invention a pour objet l'utilisation d'un composé de formule (I)

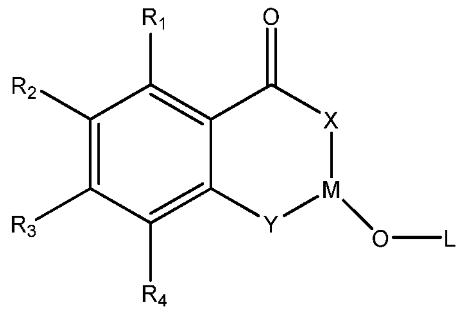

dans laquelle

- $R_1$, $R_2$, $R_3$ et $R_4$ sont indépendamment choisis parmi le groupe constitué par un hydrogène, un halogène, de préférence -Cl, -Br ou -F, -OH, $-O(CO)-CH_3$, un alcoxy en $C_1$-$C_6$, un alkyle en $C_1$-$C_6$, $-NH_2$, et -CN,
- X et Y sont indépendamment l'un de l'autre O, S ou $NR_5$,
- M est Bi,
- L est H, ou un motif de vectorisation comprenant de 1 à 40 atomes de carbone et
- Chaque groupe $R_5$ est indépendamment H ou un alkyle en $C_1$-$C_6$,

ou l'un de ses sels acceptables, en tant qu'agent phytopharmaceutique pour prévenir ou traiter une maladie cryptogamique se développant au niveau du bois d'une plante, ladite maladie cryptogamique étant associée ou causée par un ou plusieurs champignons phytopathogènes choisis parmi les basidiomycètes parasitaires et les ascomycètes parasitaires.

Dans certains modes de réalisations, le composé de formule (I) est caractérisé en ce que :

- $R_1$ et $R_3$ sont -H,
- $R_2$ et $R_4$ sont indépendamment choisis parmi -H, -Cl, et -F
- X et Y sont O
- M est Bi, et
- L est H, un hydroxy-alkyle en $C_1$-$C_6$, ou $-(CH_2-CH_2-O)_n-CH_2-CH_2-OH$ où n est un entier allant de 1 à 19, de préférence de 1 à 10.

Un composé préféré est le sous-salicylate de bismuth.

La plante peut être de tout type. Il peut s'agir d'une plante ligneuse telle que définie dans la revendication 4.

Dans certains modes de réalisation, la maladie est une maladie cryptogamique du bois associée un ou plusieurs pathogènes choisis parmi les pathogènes appartenant à la famille des *Botryosphaeriaceae,* au genre *Eutypa,* par exemple *Eutypa lata,* au genre *Phaeomoniella,* au genre *Phaeoacremonium,* au genre *Formitoporia,* au genre *Verticillium,* au genre *Stereum* ou au genre *Phomopsis.* A titre d'exemple, la maladie du bois peut être associée à un pathogène choisi parmi *Phaeomoniella chlamydospora, Phaeoacremonium aleophilum, Eutypa lata, Fomitiporia mediterranea, Fomitiporia punctata, Botryosphaeria stevensii, Diplodia seriata, Neofusicoccum parvum, Stereum hirsutum* et *Verticillium longisporum*

Dans un mode de réalisation préféré, le composé selon l'invention est utilisé dans le traitement ou la prévention d'une maladie cryptogamique de la vigne choisie dans le groupe constitué par l'esca, l'eutypiose, les *Botryosphaeria* Dieback, notamment le Black Dead Arm, la pourriture noire (Black rot), l'excoriose, et l'anthracnose.

Dans certains modes de réalisation, le composé selon l'invention peut être utilisé :

- pour prévenir ou traiter les infections des plaies de taille, notamment des arbres fruitiers et des vignes, ou
- pour la désinfection du matériel de propagation ou de multiplication, notamment au cours de la préparation des plants, de préférence des plants de vigne, en pépinière.

Enfin, l'invention a également pour objet une méthode pour traiter ou prévenir une maladie cryptogamique se développant au niveau du bois d'une plante et associée ou causée par un ou plusieurs champignons phytopathogènes choisis parmi les basidiomycètes parasitaires et les ascomycètes parasitaires, ladite méthode comprenant l'application du composé de formule (I) sur au moins une partie de ladite plante.

## FIGURES

**La Figure** 1 montre la croissance mycélienne de *N. parvum* sur boîtes de Pétri contenant du milieu PDA supplémenté en oxyde de bismuth, sous-salicylate de bismuth, citrate de bismuth, oxyde de cuivre ou oxyde d'antimoine à des doses comprises entre 0,01 et 40 mM.
Les résultats correspondent aux taux de croissance du mycélium par rapport à la condition témoin où le champignon a été cultivé sur du milieu PDA vierge (croissance de 100 %).
**La Figure 2** montre la croissance mycélienne de *B. cinerea* sur boîtes de Pétri contenant du milieu PDA supplémenté en oxyde de bismuth, sous-salicylate de bismuth, citrate de bismuth, oxyde de cuivre ou oxyde d'antimoine à des doses comprises entre 0,01 et 40 mM.
Les résultats correspondent aux taux de croissance du mycélium par rapport à la condition témoin où le champignon a été cultivé sur du milieu PDA vierge (croissance mycélienne de 100 %).
**La Figure 3** montre le développement des nécroses suite à l'inoculation par *N. parvum* Bourgogne d'entrenoeuds verts de *V. vinifera* cv Chardonnay ayant subi au préalable un bain d'oxyde de bismuth, d'acide salicylique, de sous-salicylate de bismuth à 15 mM ou d'eau (témoin) durant 10 minutes. Les résultats ont été calculés en fonction des aires de nécroses observées dans la condition témoin (= 100 %).
**La Figure 4** montre l'expression des gènes de défense *VvPR1* et *VvEDS1* (codant des enzymes de la voie de l'acide salicylique) dans des cals de *V. vinifera* cv Chardonnay cultivés sur milieu MPM1 supplémenté en acide salicylique ou sous-salicylate de bismuth à 10 mM. L'expression des gènes a été évaluée par RT-qPCR après 4 jours de culture.

Les résultats représentent l'expression relative des gènes dans les cals cultivés sur milieu supplémenté par rapport à ce qui est observé dans les cals cultivés sur milieu MPM1 non supplémenté (témoin).

## DESCRIPTION DETAILLEE DE L'INVENTION

Il est décrit de nouvelles méthodes de prévention et de traitement des maladies cryptogamiques chez les plantes. Ces méthodes sont basées sur l'utilisation du sous-salicylate de bismuth ou de l'un de ses dérivés.

Le sous-salicylate de bismuth est utilisé en médecine humaine pour le traitement et la prévention des troubles gastro-intestinaux. Il s'agit du principe actif des spécialités Pepto-bismol® et Kaopectate® commercialisées, entre autres, pour le traitement des nausées, des diarrhées légères et des indigestions. Sa posologie maximale d'absorption est de 500 mg/jour chez l'homme en cas de troubles digestifs.
Des études anciennes et isolées, datant des années 40, ont évoqué l'utilisation du sous-salicylate de bismuth pour le traitement du mildiou du tabac (blue mold disease of tabacco en anglais) (abrégé de Clayton et al., Journal of Agricultural Research, 1943, 66, 261, abrégé). Les mildious sont causés par des microorganismes filamenteux qui ne sont pas des champignons, mais des oomycètes. Les oomycètes appartiennent au phylum des hétérokontes et sont, d'un point de vue phylogénétique, proches d'organismes photosynthétiques tels que les algues brunes et les diatomées. Ils n'ont aucun ancêtre commun avec les eumycètes.

A la connaissance des Inventeurs, l'utilisation du sous-salicylate de bismuth en tant qu'agent phytopharmaceutique ou phytosanitaire pour le traitement ou la prévention d'une maladie cryptogamique du bois, en particulier causée par un champignon parasitaire appartenant aux basidiomycètes ou aux ascomycètes n'a jamais été décrite à ce jour.

De manière surprenante, les Inventeurs ont montré que le sous-salicylate de bismuth est capable d'inhiber

significativement la croissance mycélienne de plusieurs phytopathogènes, en particulier *Neofusicoccum parvum,* impliqué dans les dépérissements à *Botryosphaeria* (*Botryosphaeria* dieback), et *Botrytis cinerea,* impliqué dans la pourriture grise des fruits (également appelée « *moisissure ou pourriture grise* »). Les Inventeurs ont montré également que l'oxyde de bismuth et le sous-citrate de bismuth présentent, quant à eux, une très faible activité d'inhibition vis-à-vis de ces phytopathogènes.
Les résultats obtenus *in vitro* ont été confirmés *in vivo* sur un modèle de nécroses sur entrenoeuds de bois de cépage Chardonnay. Le trempage préalable d'un entrenoeud de bois inoculé par du mycélium de *N. parvum* dans une solution à 15 mM de sous-salicylate de bismuth pendant 10 min a permis de limiter de manière très significative (≈ 50%) la formation et la propagation des nécroses et donc le développement mycélien. Un tel résultat n'a pas été observé pour un trempage préalable dans un bain à 15 mM d'acide salicylique ou dans un bain à 15 mM d'oxyde de bismuth. Les Inventeurs ont également montré que le sous-salicylate de bismuth est capable d'induire certains gènes de défense et de résistance de la plante aux phytopathogènes. Des essais complémentaires ont montré que le sous-salicylate de bismuth est également capable d'inhiber *in vitro* la croissance mycélienne de plusieurs champignons phytopathogènes modèles impliqués dans diverses pathologies végétales telles que l'alternariose, la fusariose, la septoriose du blé, la moisissure ou la pourriture des fruits, notamment des agrumes, la pyriculariose, la moniliose ou encore la verticilliose. De manière notable, l'effet biocide du sous-salicylate de bismuth vis-à-vis des champignons phytopathogènes est très supérieur à celle que le Demandeur a pu observer vis-à-vis de deux oomycètes modèles. Un tel résultat montre que l'effet biocide du sous-salicylate de bismuth est spécifique des champignons phytopathogènes, notamment des basidiomycètes et les ascomycètes parasitaires, et qu'il ne pouvait pas être anticipé des études anciennes concernant le mildiou du tabac.
Les résultats expérimentaux décrits dans la présente demande illustrent les propriétés phytopharmaceutiques du sous-salicylate de bismuth vis-à-vis des infections cryptogamiques et sa capacité à pénétrer le bois. Le sous-salicylate de bismuth présente, de plus, l'avantage d'être particulièrement peu toxique pour l'homme. Il présente également une faible toxicité vis-à-vis de l'environnement, comme l'a démontré le Demandeur au travers d'expériences d'éco-toxicité.
Le sous-salicylate de bismuth est ainsi particulièrement adapté à une utilisation en tant qu'agent phytopharmaceutique pour le traitement et la prévention des maladies cryptogamiques des plantes, en particulier d'intérêt agricole.

Ainsi, il est décrit l'utilisation du sous-salicylate de bismuth ou de l'un de ses dérivés en tant qu'agent phytopharmaceutique dans le traitement ou la prévention d'une maladie cryptogamique chez une plante.
On entend par «*sous-salicylate de bismuth* » ou « *sub-salicylate de bismuth* » le composé de formule suivante :

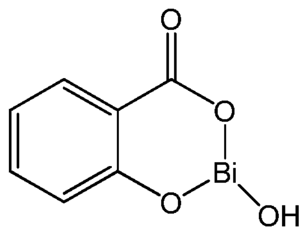

Au sens de l'invention, on entend par « *maladie cryptogamique* » une maladie causée par, ou associée à, un ou plusieurs champignons phytopathogènes. Au sens de l'invention, le terme *« maladie cryptogamique* » englobe également les maladies favorisées par la colonisation de la plante par un ou plusieurs champignons saprophytes.
En revanche, l'expression « *maladie cryptogamique* » n'englobe pas des pathologies causées par des micro-organismes phytopathogènes qui ne sont pas des champignons. Notamment, l'expression « *maladie cryptogamique* » n'englobe pas les pathologies causées ou associées à un ou plusieurs phytopathogènes appartenant aux oomycètes tels que *Peronospora tabacina, Plasmapora viticola ou Phytophtora infestans.* En d'autres termes, les maladies de type mildiou (downy mildew en anglais) telles que le mildiou du tabac, le mildiou de la vigne ou le mildiou de la pomme de terre ne sont pas comprises dans l'expression « *maladie cryptogamique* » selon l'invention.
Les maladies cryptogamiques englobent, sans y être limitées, l'esca, l'eutypiose, les dépérissements à *Botryosphaeria,* le black rot (pourriture noire), la pourriture grise, l'anthracnose, l'excoriose, l'alternariose, la fusariose, la septoriose, les moisissures ou pourritures des fruits, notamment des agrumes, la pyriculariose, la moniliose ou encore la verticilliose
Dans le cadre de l'invention, la maladie cryptogamique est associée ou causée par un ou plusieurs champignons phytopathogènes, en particulier un champignon microscopique phytopathogène, choisis parmi les basidiomycètes parasitaires et les ascomycètes parasitaires. Les basidyomycètes parasitaires englobent, sans y être limités, les champignons phytopathogènes du genre *Fomitiporia, Stereum* et de l'ordre des Pucciniales, notamment du genre *Hemileia.*
Les ascomycètes parasitaires englobent, sans y être limités, les champignons phytopathogènes appartenant aux genres *Verticillium, Alternaria, Fusarium, Magnaporthe, Monilia, Penicilium, Aspergillus, Botrytis, Eutypa, Phaeomoniella, Phaeoacremonium. Phomopsis, Cercospora, Mycosphaerella, Bipolaris ou encore à la famille des Botryosphaeriaceae*

*notamment* aux genres *Spencermatinsia, Neofusicoccum, Botryosphaeria, Diplodia,* et *Lasiodiplodia.* Les ascomycètes englobent également les champignons phytopathogènes responsables de l'oïdium. Ces champignons phytopathogènes appartiennent à la famille des érysiphacées, notamment aux genres *Erysiphe, Podosphaera, Sphaerotheca,* et *Uncinula, par exemple Erysiphe necator.*

A titre d'exemple, le ou les champignons appartenant aux ascomycètes parasitaires ou aux basidomycètes parasitaires peut/peuvent être choisis parmi les genres *Alternaria, Fusarium, Septoria, Verticillium Magnaporthe, Monilia, Penicilium, Aspergillus, Septoria, Botrytis et Neofusicoccum.*

On entend par champignon phytopathogène « *associé à, impliquant ou causant une maladie* » un champignon phytopathogène capable par lui-même d'induire la maladie, et/ou de favoriser le développement de la maladie et/ou de l'un de ses symptômes chez la plante considérée. De préférence, le champignon phytopathogène n'est pas un pathogène pour le règne animal, en particulier vis-à-vis des mammifères, y compris pour l'homme.

A titre d'exemple, la maladie cryptogamique peut être associée à, ou causée par, un ou plusieurs microorganismes appartenant à la famille *Botryosphaeriaceae*

Dans certains modes de réalisation, la maladie cryptogamique est associée ou causée par un ou plusieurs pathogènes appartenant à la famille *Botryosphaeriaceae.* Au sens de l'invention, de telles maladies englobent les maladies de dépérissement à *Botryosphaeria* et des pathologies affectant les parties aériennes des plantes et impliquant un ou plusieurs phytopathogènes de la famille *Botryosphaeriaceae,* notamment la pourriture noire (communément connue sous le nom de Black rot) et le Macrophoma rot.

Au sens de l'invention, l'expression « dépérissement à *Botryosphaeria » ou « Botryosphaeria dieback »* désigne les maladies cryptogamiques impliquant un ou plusieurs phytopathogènes appartenant à la famille des *Botryosphaeriaceae* et pouvant affecter les parties ligneuses de la plante. Les maladies de dépérissement à *Botryosphaeria* englobent les maladies du bois telles que le Black Dead Arm, le dépérissement à *Diplodia* (*Diplodia-cane* dieback) et le chancre à *Botryosphaeria* (*Bostryosphaeria* canker).

Les maladies cryptogamiques impliquant un phytopathogène appartenant à la famille *Botryosphaeriaceae* et touchant les vignes sont décrites notamment dans Urbez-Torres, Phytopathol. Mediterr., 2011, 50 (Supplement), S5-S45, dont le contenu est incorporé ici par référence.

Au sens de l'invention, on entend par « *traitement d'une maladie* » le fait de soigner, d'atténuer, de ralentir, de stopper la progression d'une maladie ou de l'un de ses symptômes chez une plante. Plus précisément, on entend par « *traitement* » le fait de stopper, de ralentir, de diminuer, de contrôler ou de supprimer l'infection de la plante par un champignon phytopathogène.

On entend par « *prévention d'une maladie* » le fait d'empêcher ou de retarder l'apparition d'une maladie ou de l'un de ses symptômes chez une plante, le fait de ralentir, de diminuer ou de prévenir la propagation d'une maladie dans une culture donnée, le fait d'éradiquer ou de diminuer la présence de phytopathogènes à l'état latent chez une plante ou dans une culture, ou encore le fait de diminuer l'incidence d'une maladie ou le risque de contamination par cette maladie au sein d'une culture donnée.

Au sens de l'invention, on entend par «*agent phytopharmaceutique ou phytosanitaire*» un composé destiné à protéger les végétaux et les produits de culture contre des organismes nuisibles, en particulier des micro-organismes, ou à prévenir leur action, à assurer la conservation des produits végétaux, et/ou à exercer une action sur les processus vitaux des végétaux (dans la mesure où il ne s'agit pas de substances nutritives), par exemple en favorisant la croissance végétale ou en stimulant les défenses de la plante.

Au sens de l'invention, on entend, de préférence, par « *agent phytopharmaceutique ou phytosanitaire* » un composé adapté à une utilisation en agriculture pour traiter ou prévenir une maladie, de préférence causée par un microorganisme parasitaire, chez un organisme végétal. Un tel agent phytopharmaceutique peut avoir un effet direct sur le développement et la viabilité du ou des micro-organismes impliqués ou associés à la maladie et/ou induire ou stimuler les mécanismes de défense ou de résistance de la plante contre le ou lesdits micro-organismes.

De préférence, au sens de l'invention, les composés de formule (I) tels que définis ci-après présentent une activité choisie parmi une activité fongistatique, une activité fongicide, une activité de stimulation des défenses de la plante et leurs combinaisons. De préférence, les composés de formule (I) présentent à la fois une activité fongistatique et une activité de stimulation des défenses de la plante.

Au sens de l'invention, on entend par « *agent fongistatique* » un composé capable de prévenir, de ralentir ou de stopper le développement et/ou la reproduction d'un champignon phytopathogène.

Au sens de l'invention, on entend par « *plante* » un organisme végétal pluricellulaire de tout type. De préférence, la plante est une plante vasculaire, c'est-à-dire une plante appartenant aux trachéophytes. Les plantes vasculaires englobent les plantes ligneuses et les plantes herbacées. De préférence, la plante est d'intérêt agricole. Il peut s'agir, par exemple, d'une culture potagère, fruitière, céréalière ou viticole.

Dans certains modes de réalisation, la plante est une plante ligneuse. A titre d'exemple de plantes ligneuses, on peut citer les arbres fruitiers tels que le bananier, l'abricotier, le manguier, le prunier, le pécher, le pommier, le poirier, le cerisier, le cognassier, le noyer, le figuier, et les citrus, les arbres forestiers, les arbres et arbustes ornementaux ou

horticoles comme les rosiers, le coton, le café et les vignes.
Il est également décrit une plante herbacée. A titre d'exemple de plantes herbacées, on peut citer les plantes de la famille des solanacées comme la tomate et la pomme de terre, les plantes de la famille des apiacées comme la carotte ou le panais, les crucifères (ou famille des *Brassicaceae*) comme le colza, les graminées comme la canne à sucre, et céréales comme le maïs, le riz, le blé, l'orge, l'avoine, et le seigle.

Il est décrit l'utilisation d'un composé de formule (I)

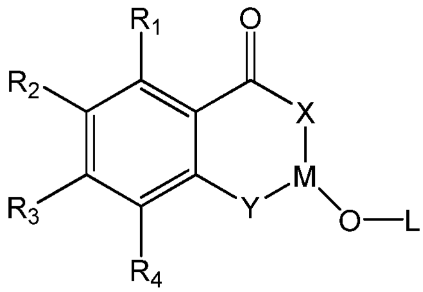

dans laquelle

- $R_1$, $R_2$, $R_3$ et $R_4$ sont indépendamment choisis parmi le groupe constitué par un hydrogène, un halogène, -OH, $-O(CO)-CH_3$, un alcoxy en $C_1$-$C_6$ tel que $-OCH_3$, un alkyle en $C_1$-$C_6$, $-NH_2$, $-CF_3$ et -CN,
- X et Y sont indépendamment l'un de l'autre O, S ou $NR_5$,
- M est Bi, Cu ou Sb,
- L est H, ou un motif de vectorisation comprenant de 1 à 40 atomes de carbone, et
- Chaque groupe $R_5$ est indépendamment H ou un alkyle en $C_1$-$C_6$,

ou l'un de ses sels acceptables sur le plan phytopharmaceutique
en tant qu'agent phytopharmaceutique, pour le traitement ou la prévention d'une maladie cryptogamique chez une plante, ladite maladie cryptogamique étant associée ou causée par un ou plusieurs champignons phytopathogènes choisis parmi les basidiomycètes parasitaires et les ascomycètes parasitaires. Un alkyle en $C_1$-$C_6$ englobe, sans y être limité, les groupes méthyle, éthyle, propyle, butyle, pentyle, hexyle, isopropyle, tert-butyle, iso-butyle, sec-butyle, cyclopropyle, cyclobutyle, cyclopentyle et cyclohexyle. Les groupes alkyles préférés selon l'invention sont les groupes en $C_1$-$C_3$, en particulier les groupes méthyle, éthyle, propyle et isopropyle.
Un groupe hydroxyalkyle en $C_1$-$C_6$ se réfère à un groupe alkyle en $C_1$-$C_6$, de préférence en en $C_1$-$C_3$, substitué par au moins un hydroxyle.
Un groupe alcoxy en $C_1$-$C_6$ se réfère à un groupe R-O- où R est un groupe alkyle en $C_1$-$C_6$, de préférence en en $C_1$-$C_3$.
Les atomes d'halogènes englobent -F, -Br, -Cl et -I. Les atomes d'halogènes préférés selon l'invention sont -F et -Cl.
On entend par « *motif de vectorisation* » un groupe chimique favorisant les propriétés du composé, notamment la solubilité du composé dans l'eau et/ou sa capacité à pénétrer le bois. Le motif de vectorisation peut comprendre, entre autres, un radical glycosyle et/ou une chaîne hydrocarbonée comprenant de 1 à 40 atomes de carbones. Cette chaîne hydrocarbonée peut être interrompue par un ou plusieurs hétéroatomes, de préférence -O- ou -S-, et/ou par un ou plusieurs groupes de type $-SO_2-$, -SO-, -NHC(O)-, -OC(O)-, -NH, et -NH-CO-NH-. De manière additionnelle ou alternative, ladite chaîne hydrocarbonée peut être substituée par un ou plusieurs groupes, de préférence choisis parmi $-OR_5$, $-N(R_5)_2$, $-CF_3$ et un alkyle en $C_1$-$C_6$, un monosaccharide ou un disaccharide. Dans certains modes de réalisation, le motif de vectorisation est un motif de type oligo- ou polyéther, par exemple un polyéthylène glycol, un polypropylène glycol ou encore un polytétraméthylene glycol. Dans certains modes de réalisation, L comprend ou consiste en $-(CH_2-CH_2-O)_n-CH_2-CH_2-OH$ où n est un entier allant de 1 à 19.
Il est également décrit que le composé de formule (I) est caractérisé en ce que :

- $R_1$, $R_2$, $R_3$ et $R_4$ sont indépendamment choisis parmi le groupe constitué par un hydrogène, un halogène, de préférence -Cl ou -F, -OH, $-O(CO)-CH_3$, $-OCH_3$, $-NH_2$, $CF_3$ et -CN
- X et Y sont O,
- M est Bi ou Cu, et
- L est H, un hydroxy-alkyle en $C_1$-$C_6$, un radical glycosyle ou une chaîne oligo- ou polyéther telle que $-(CH_2-CH_2-O),-CH_2-CH_2-OH$ où n est un entier allant de 1 à 19

Il est décrit que le composé de formule (I) est caractérisé en ce que :

- $R_1$ et $R_3$ sont -H,
- $R_2$ et $R_4$ sont indépendamment le groupe constitué par -H, -Cl, -F, -OH, -O(CO)-$CH_3$, -$OCH_3$, -$NH_2$, et -CN. De préférence, $R_2$ et $R_4$ sont choisis parmi -H, -Cl ou -F,
- X et Y sont O,
- M est Bi ou Cu, de préférence Bi, et
- L est H, un hydroxy-alkyle en $C_1$-$C_6$, un radical glycosyle ou une chaîne oligo- ou polyéther telle que -($CH_2$-$CH_2$-O),-$CH_2$-$CH_2$-OH où n est un entier allant de 1 à 19.

Il est aussi décritle composé de formule (I) est caractérisé en ce que :

- $R_1$ et $R_3$ sont -H,
- $R_2$ et $R_4$ sont indépendamment choisis parmi -H, -Cl, et -F
- X et Y sont O
- M est Cu ou Bi, de préférence Bi, et
- L est H, un hydroxy-alkyle en $C_1$-$C_6$, ou -($CH_2$-$CH_2$-O)$_n$-$CH_2$-$CH_2$-OH où n est un entier allant de 1 à 19, de préférence de 1 à 10.

La présente invention concerne l'utilisation d'un composé de formule (I) tel que décrit précédemment et avec M étant Bi pour traiter ou prévenir une maladie cryptogamique se développant au niveau du bois d'une plante, ladite maladie cryptogamique étant associée ou causée par un ou plusieurs champignons phytopathogènes choisis parmi les basidiomycètes parasitaires et les ascomycètes parasitaires.

Des composés préférés selon l'invention sont les composés de formule (Ia) :

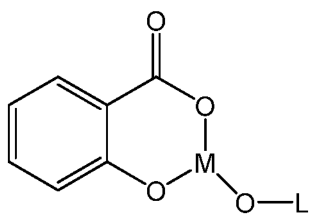

(Ia)

où M est Bi et L est tel que défini ci-avant.

De préférence :

L est H, un hydroxy-alkyle en $C_1$-$C_6$, ou -($CH_2$-$CH_2$-O)$_n$-$CH_2$-$CH_2$-OH avec n est un entier allant de 1 à 19, de préférence de 1 à 10.

Il est décrit des composés de formule (Ia) tels que L = H et M = Bi ou Cu.

Les composés de formule (I) peuvent être préparés par synthèse chimique comme illustré dans dans Timakova et al., Chemistry for Sustainable Development, 2009, 305-313.

Ces composés peuvent être utilisés pour le traitement de toute maladie cryptogamique affectant les plantes décrites dans la présente description.

Les composés selon la formule (I) peuvent être utilisés pour traiter ou prévenir les pathologies au niveau du bois et des racines, mais également celles se développant au niveau des parties aériennes de la plante telles que les fruits, les feuilles, les tiges, les épis, les fleurs et les panicules.

Les symptômes provoqués par les maladies cryptogamiques se développant au niveau des parties aériennes des plantes sont variés et comprennent, entre autres, des taches, par exemple noires, brunes ou jaunâtres, des brûlures ou des nécroses au niveau des feuilles, des tiges ou des grains, une fonte des semis, l'apparition de pycnides, l'apparition de pustules au niveau des feuilles, des phénomènes de flétrissement des feuilles, un dessèchement notamment des feuilles, une chlorose ou décoloration foliaire, l'apparition de périthèces au niveau de la tige, ou encore des moisissures et flétrissement des fruits.

A titre d'exemple de maladies cryptogamiques, on peut citer :

- Les alternarioses qui sont causées par des champignons du genre *Alternaria.* On peut citer l'alternariose de la betterave (*Alternaria alternata*), de la carotte (*Alternaria dauci*), des crucifères (*Alternaria brassicicola, Alternaria brassicae*), des solanacées (*Alternaria solani*) ou du blé (*Alternaria triticina*),
- les fusarioses causées, notamment, par les phytopathogènes du genre *Fusarium,* qui selon l'espèce végétale touchée, peuvent se manifester par des lésions et/ou des colorations brunes au niveau des grains et des tiges ainsi que l'apparition de pourriture sèche. A titre d'exemple, on peut citer les espèces *Fusarium graminearum* et *Fusarium*

*nivale* qui touchent le blé ou *Fusarium sambucinum* qui touche la pomme de terre. On peut également citer la fusariose de la canne à sucre.

- les septorioses causées par des phytopathogènes de la famille des *Mycosphaerellaceae,* en particulier du genre *Septoria.* On peut citer à titre d'exemple, la septoriose de la carotte (*Septoria dauci*), de la tomate (*Septoria lycopersici*) ou du blé (*Septoria tritici*),
- les verticillioses causées par les phytopathogènes du genre *Verticillium* notamment par *Verticillium dahliae* et *Verticillium albo-atrum* et qui peuvent affecter différents types de plantes herbacées comme la tomate ou l'aubergine,
- la pyriculariose qui touche principalement le riz et est causée par *Magnaporthe grisea,*
- les monilioses causées par des phytopathogènes du genre *Monilinia* et qui affectent principalement les arbres fruitiers. On peut citer à titre d'exemple de phytopathogènes *Monilinia fructigena* qui s'attaque principalement aux fruits à pépins et *Monilinia laxa* qui touche principalement les fruits à noyaux,
- Les maladies de pourriture et moisissure des fruits causées notamment par *Pénicillium digitatum, Aspergillus Niger* ou *Botrytis cinerea.*
- Les cercosporioses causées par des champignons du genre imparfait *Cercospora* ou par le genre *Mycosphaerella.* On peut citer la cercosporiose de la betterave (*Cercospora beticola*), ou la cercosporiose du maïs (*Cercospora zeae-maydis* et *Cercospora zeina*). La cercosporiose noire qui est une maladie foliaire du bananier et qui est causée par *Mycosphaerella fijiensis,*
- Les helminthosporioses causées notamment par le genre *Bipolaris* et qui affecte principalement les graminées. On peut citer l'helminthosporiose du riz causée par *Bipolaris oryzae,* l'helminthosporiose du maïs causée par *Bipolaris maydis* et *Bipolaris zeicola,* l'helminthosporiose des céréales causée par *Bipolaris sorokiniana,*
- Les rouilles causées par des champignons parasitaires de l'ordre des Pucciniales. A titre d'exemple, on peut citer la rouille du caféier causée par les champignons basidiomycètes, *Hemileia vastatrix* et *Hemileia coffeicola.*
- Le piétin-échaudage qui affecte principalement les céréales et autres graminées, tels que le blé, l'orge et le seigle. La contamination a lieu au niveau des racines et les symptômes sont visibles au niveau de la tige, des racines (noircissement et nécrose) et des épis (blanchissement). Cette maladie provoque une fonte des semis. Le piétin-échaudage est causé principalement par *Gaeumannomyces graminis.*

Les pathologies cryptogamiques affectant les parties aériennes peuvent également comprendre des maladies de pourriture et de moisissure du fruit ou des feuilles telles que la pourriture grise, le black rot (également connu sous le nom de pourriture noire ou pourriture sèche), et le Macrophoma rot. Ces pathologies peuvent impliquer différents types de champignons. A titre d'exemple, les champignons phytopathogènes affectant les feuilles, les fruits, les baies et/ou les fleurs, notamment chez la vigne englobent, sans y être limités, *Guignardia bidwellii* (également connu sous le nom *Botryosphaeria bidwellii)* (Black rot), *Botryosphaeria. dothidea* (Macrophoma rot) et *Botrytis cinerea* (pourriture grise).
Il est décrit que la maladie cryptogamique peut être choisie dans le groupe constitué par les alternarioses, les fusarioses, les septorioses, les verticillioses, la pyriculariose, les monilioses, les rouilles causées par des champignons parasitaires de l'ordre des Pucciniales, les cercosporioses, les helminthosporioses, le piétin-échaudage les maladies de pourriture et moisissure des fruits, notamment la pourriture grise, le black rot, et le Macrophoma rot.
Il est aussi décrit que la pathologie cryptogamique est associée ou causée par un champignon phytopathogène choisi parmi le groupe constitué par *Verticillium dahliae, Verticillium albo-atrum, Magnaporthe grisea, Monilinia fructigena, Monilinia laxa, Penicillium digitatum, Aspergillus Niger, Botrytis cinerea, Septoria dauci, Septoria lycopersici, Septoria tritici, Fusarium graminearum, Fusarium nivale, Alternaria triticina, Alternaria alternata, , Alternaria dauci, Alternaria solani, Alternaria brassicicola, Alternaria brassicae, Guignardia bidwellii, Botryosphaeria. Dothidea, Botrytis cinerea, Cercospora beticola, Cercospora zeae-maydis, Cercospora zeina, Mycosphaerella fijiensis, Bipolaris oryzae, Bipolaris maydis, Bipolaris zeicola, Bipolaris sorokiniana, Gaeumannomyces graminis, Hemileia vastatrix et Hemileia coffeicola.*
On décrit également l'utilisation des composés de formule (I) pour prévenir ou traiter une maladie de pourriture ou de moisissure du fruit et/ou des feuilles, en particulier de la vigne. Ladite maladie peut être associée à un ou plusieurs pathogènes choisis parmi la famille *Botryosphaeriaceae,* et le genre *Botrytis,* notamment *Botrytis cinerea.* De préférence, la plante traitée est une culture d'intérêt agronomique. A titre d'exemple, les plantes d'intérêt agricole comprennent la vigne, les fraisiers, la tomate, le tournesol, et les arbres fruitiers.
Dans le cadre des maladies cryptogamiques impliquant une contamination des parties aériennes de la plante comme les feuilles et les fruits, le composé de formule (I) peut être administré pendant les périodes de développement foliaire, de floraison et de maturation des fruits, par exemple sous la forme d'une solution pulvérisable, directement sur les fruits et/ou les feuilles.
Il est décrit que le composé de formule (I) peut être utilisé pour prévenir ou traiter la pourriture ou la moisissure des produits de culture. On entend par « *produits de culture* » les produits cueillis ou récoltés, notamment les légumes, les fruits, les fleurs ou les semences. Les fruits englobent, sans y être limités, les grappes de raisin ou de groseille, les baies telles que les mûres et les framboises, les fraises, les fruits à pépins tels que les pommes, les agrumes, les tomates, et les poires, les fruits à noyau notamment les cerises, les pêches, les nectarines, les prunes, les abricots, les

avocats, ou encore les mangues. Plus précisément, le composé de formule (I) peut être utilisé à titre d'agent conservateur pour le conditionnement et le stockage des produits de récolte. Typiquement, le composé peut être appliqué aux produits récoltés, avant ou pendant leur conditionnement, par pulvérisation.

Selon l'invention, les pathologies cryptogamiques du bois englobent les maladies dites de *« dépérissement »* telles que l'esca, les Botrysphaeria dieback, en particulier le Black Dead Arm, le dépérissement à *Diplodia* ou le chancre à *Botryosphaeria,* l'eutypiose, l'anthracnose et l'excoriose. Ces maladies sont associées à un ou plusieurs pathogènes tels que ceux appartenant à la famille des *Botryosphaeriaceae.*

L'esca, l'eutypiose et le Black Dead Arm sont les principales maladies du bois affectant la vigne. Ces maladies sont, entre autres, décrites dans Bertsch et al., Plant Pathology, 2013, 1-23, dont le contenu est incorporé ici par référence.

Les pathologies du bois sont causées par différents types de pathogènes cryptogamiques. A titre d'exemple, on peut citer les pathogènes appartenant à la famille des *Botryosphaeriaceae* en particulier aux genres *Spencermatinsia, Neofusicoccum, Botryosphaeria, Diplodia* et *Lasiodiplodia,* les pathogènes appartenant au genre *Eutypa,* par exemple *Eutypa lata,* ou encore les pathogènes appartenant aux genres *Phaeomoniella, Phaeoacremonium, Formitoporia, Verticillium ou Phomopsis* tel que *P. viticola., Phaeomoniella chlamydospora, Phaeoacremonium aleophilum, Eutypa lata, Fomitiporia mediterranea, Fomitiporia punctata, Botryosphaeria stevensii, Diplodia seriata, Neofusicoccum parvum, Stereum hirsutum* et *Verticillium longisporum* sont particulièrement impliqués dans les maladies de dépérissement du bois de vigne. A titre d'exemple, *Eutypa lata* est l'agent pathogène principal de l'eutypiose. *Neofusicoccum parvum* est notamment associé au Botryosphaeria dieback, notamment au Black Dead Arm. L'esca est généralement associé à *Phaeomoniella chlamydospora, Phaeoacremonium aleophilum,* et *Fomitiporia mediterranea,* ainsi qu'à *l'Eutypa lata.*

Ainsi, selon un mode de réalisation particulier, la présente invention a pour objet l'utilisation d'un composé de formule (I) tel que défini ci-avant pour prévenir ou traiter une maladie du bois associée à un ou plusieurs pathogène(s) choisi(s) parmi *Phaeomoniella chlamydospora, Phaeoacremonium aleophilum, Eutypa lata, Fomitiporia punctata, Botryosphaeria stevensii, Fomitiporia mediterranea, Diplodia seriata, Neofusicoccum parvum, Stereum hirsutum* et *Verticillium longisporum.*

Plus généralement, un composé de formule (I) peut être utilisé pour prévenir, traiter, ou ralentir la colonisation ou l'infection d'une plante par un pathogène choisi parmi *Phaeomoniella chlamydospora, Phaeoacremonium aleophilum, Eutypa lata, Fomitiporia mediterranea, Fomitiporia punctata, Botryosphaeria stevensii, Diplodia seriata, Neofusicoccum parvum, Stereum hirsutum* et *Verticillium longisporum*

Pour le traitement ou la prévention des maladies du bois, le composé selon l'invention peut être administré sur une partie de la plante infectée, susceptible d'être infectée ou présentant des symptômes, par exemple sur une partie du tronc, du pied, des branches, des rameaux. En alternative, le composé selon l'invention peut être également appliqué sur les feuilles (par exemple sur la face inférieure des feuilles), les fleurs ou les fruits, en particulier lorsqu'une administration systémique est recherchée.

Dans le contexte des arbres fruitiers, de la vigne ou encore des plantes ornementales ou horticoles, les contaminations par les agents pathogènes responsables des maladies du bois peuvent être consécutives à la taille des végétaux. La taille des végétaux peut avoir lieu pendant la période végétative mais également pendant la période « verte » (on parle alors d'ébourgeonnage, d'effeuillage, d'échardage, de rognage ou d'éclaircissage). Ainsi, dans un mode de réalisation particulier, le composé de formule (I) peut être utilisé pour prévenir ou traiter les infections des plaies de taille, notamment dans les cultures de vigne, d'arbres fruitiers tels que l'abricotier, le manguier, le prunier, le pécher, le pommier, le poirier, le cerisier, le cognassier, le noyer, le figuier, et les citrus, les cultures de rosiers, ou encore de plantes pérennes horticoles et ornementales. Dans ce mode de réalisation, le composé de formule (I) peut être administré à la plante au moment de la taille, sous la forme d'une composition de tout type, par exemple sous la forme d'une solution pulvérisable ou encore sous la forme d'une pâte, d'un gel, d'un insert ou d'une solution pouvant être badigeonnée directement sur les plaies de taille ou injectée dans le bois.

Selon un aspect particulier, le composé de formule (I) peut être utilisé pour traiter, ou prévenir les nécroses du bois, ou ralentir leur développement chez une plante ligneuse, ladite nécrose étant associée à un pathogène de la famille des *Botryosphaeriaceae,* notamment *Neofusicoccum parvum.* De préférence la plante ligneuse est un arbre, par exemple un arbre fruitier, tels que l'olivier, le manguier, ou l'eucalyptus, un arbuste tel que le myrtillier, ou une vigne. Comme mentionné ci-avant, le composé selon l'invention peut être utilisé pour prévenir ou traiter une nécrose au niveau d'une plaie de taille.

Selon un autre aspect, les composés selon l'invention peuvent être également utilisés au cours de la préparation des plants en pépinière, en tant qu'agent désinfectant. En particulier, ils peuvent être utilisés pour désinfecter le matériel de propagation, ou les plants en sortie de pépinière, avant leur mise en champs.

Selon un aspect particulier, la présente invention a pour objet l'utilisation d'un composé de formule (I) pour prévenir ou traiter une maladie, de préférence cryptogamique, de la vigne.

Au sens de l'invention, le terme « *vigne* » englobe toutes espèces appartenant au genre *Vitis,* notamment celles appartenant au sous-genre *Mucadinia,* telles que *V. rotundifolia* ou *V. munsoniana* ; et celles appartenant au sous-genre *Euvitis* dont les espèces américaines, telles que *V. berlandieri, V. riparia, V. rupestris, V. cinerea* ou encore *Vitis labrusca,*

les espèces asiatiques, telles que *V. amurensis* et *V. coignetiae,* et l'espèce eurasiatique *V. vinifera* L. qui est l'espèce la plus cultivée en Europe et dans le monde..

Il est décrit que la maladie cryptogamique de la vigne peut être soit une maladie du bois, par exemple l'esca, une maladie de dépérissement *à Bostryosphaeria* telle que le Black Dead Arm, l'eutypiose, l'anthracnose et l'excoriose, ou une maladie affectant les feuilles ou les baies comme la pourriture noire (Black rot), le Macrophoma rot, ou la pourriture grise. Il peut s'agir d'une maladie cryptogamique choisie parmi la pourriture grise, un *Botryosphaeria* dieback, en particulier le Black Dead Arm, et l'esca. Plus généralement, les composés de formule (I) peuvent être utilisés pour prévenir ou traiter une maladie cryptogamique de la vigne impliquant un pathogène appartenant au genre *Botrytis* ou à la famille des *Botryosphaeriaceae,* de préférence *Botrytis cinerea* ou *Neofusicoccum parvum.* Selon un mode particulier de réalisation de l'invention, la maladie cryptogamique est une maladie du bois de la vigne, par exemple l'esca, une maladie de dépérissement *à Bostryosphaeria* telle que le Black Dead Arm, l'eutypiose, l'anthracnose et l'excoriose.Pour le traitement ou la prévention des maladies affectant les parties aériennes de la vigne telles que la pourriture noire (black rot), le Macrophoma rot, ou la pourriture grise, il est préférable de traiter les vignes à la fin de la période végétative, et/ou pendant les périodes de développement foliaire, de floraison et/ou de maturation des fruits. Typiquement, les composés peuvent appliqués sous forme d'une solution, par exemple par pulvérisation sur les vignes. Pour le traitement ou de la prévention des maladies du bois de vigne, le composé peut être utilisé en pépinière, lors de la préparation des plants, ou au moment ou en prévision de la taille.

Par exemple, les composés de formule (I) peuvent être utilisés pour la désinfection du matériel de propagation ou de multiplication, c'est-à-dire des porte-greffes et des greffons. Les composés de formule (I) peuvent être également utilisés pour traiter les greffes-boutures avant ou après la stratification. Alternativement ou de manière additionnelle, les composés selon l'invention peuvent être utilisés pour la désinfection des plants avant leur mise en pot ou leur mise en plein champ. A titre d'illustration, les matériels de propagation et les plants peuvent être mis à tremper dans un bain contenant un ou plusieurs composés selon l'invention. Typiquement, il peut s'agir d'une solution aqueuse ou hydro-alcoolique présentant une concentration comprise entre 0,1 mM et 1 M d'un composé de formule (I), par exemple entre 1 mM et 500 mM de composé de formule (I).

Le cas échéants, ils peuvent être pulvérisés ou badigeonnés à l'aide d'une solution comprenant un ou plusieurs composés selon l'invention. De manière avantageuse, les composés selon l'invention peuvent être utilisés en combinaison ou en substitution des traitements à l'eau chaude ou à l'aide de bains de bénomyle, de captane ou de chlorure de didécylméthylammonium décrits dans l'état de la technique.

Il va s'en dire que les composés selon l'invention peuvent être également utilisés pour traiter à titre préventif les vignes-mères de greffons et de porte-greffes.

Comme mentionné ci-avant, les composés selon l'invention peuvent être utilisés pour prévenir ou traiter les infections des plaies de taille, en particulier les infections par *N. parvum.* A cette fin, ils peuvent être appliqués avant ou après la taille, typiquement juste après la taille par pulvérisation, badigeonnage ou injection dans le bois.

Dans l'ensemble des utilisations telles que décrites ci-avant, les composés préférés selon l'invention sont les composés de formule (Ia) et, tout particulièrement le sous-salicylate de bismuth.

De manière générale, les composés de formule (I) sont de préférence formulés dans une composition phytopharmaceutique avant d'être utilisés. Ainsi, il est également décrit une composition phytopharmaceutique comprenant un composé de formule (I) et au moins un excipient acceptable sur le plan phytopharmaceutique. Il va sans dire que ladite composition phytopharmaceutique est destinée et appropriée à une utilisation dans le traitement ou la prévention d'une maladie, de préférence cryptogamique, chez une plante. En d'autres termes, la composition phytopharmaceutique est caractérisée par une forme galénique et une teneur en composé de formule (I) adaptées à son administration à une plante. Il va de soi que le composé de formule (I) est présent à titre de principe actif dans la composition phytopharmaceutique.

La composition phytopharmaceutique peut comprendre un ou plusieurs composés de formule (I). Les composés préférés sont les composés de formule (Ia) et, tout particulièrement, le sous-salicylate de bismuth.

La composition phytopharmaceutique peut être de tout type. Il peut s'agir d'une solution aqueuse ou hydro-alcoolique, d'une pâte, d'un gel en particulier un gel aqueux (ou hydrogel), d'une glue, d'une mousse, d'une émulsion eau-dans huile ou huile-dans-l'eau, d'une émulsion multiple, d'une micro- ou nano-émulsion, d'une solution micellaire, d'une suspension, ou d'un colloïde. La composition phytopharmaceutique peut aussi être solide, par exemple sous forme d'une poudre ou de granulés directement applicables par « poudrage » ou devant être dissous ou dispersés dans un solvant adapté avant application.

La composition phytopharmaceutique peut également se présenter sous la forme d'un insert ou implant destiné à être inséré dans le bois, en particulier dans une partie du bois de la plante infectée par le pathogène. La composition phytopharmaceutique peut alors se présenter sous la forme d'une matrice polymérique permettant une libération contrôlée du composé de formule (I) dans le bois.

La composition phytopharmaceutique comprend généralement de 0,01% à 50% en poids du composé de formule (I) et de 50% à 99,99% en poids d'un ou de plusieurs excipients acceptables sur le plan phytosanitaire, les pourcentages en

poids étant exprimés par rapport au poids total de la composition. De préférence, la composition phytopharmaceutique comprend généralement de 0,1% à 30% en poids du composé de formule I et de 70% à 99,9% en poids d'un ou de plusieurs excipients.

On entend par « *excipient acceptable sur le plan phytosanitaire ou phytopharmaceutique* » un excipient qui ne présente pas de toxicité notable, à la dose où il est utilisé, vis-à-vis de la plante, de l'environnement et de l'homme. Les excipients utilisables dans les compositions phytopharmaceutiques sont bien connus de l'homme du métier et regroupent, entre autres, les diluants et les charges, les agents mouillants, les tensio-actifs, par exemple les tensio-actifs ioniques, amphotères ou non-ioniques, les agents dispersants, les agents épaississants, les agents gélifiants, des agents permettant une libération contrôlée de l'actifs, par exemple des agents d'encapsulation ou micellaires tels que les phospholipides, les adjuvants thixotropes, les colorants, les agents antioxydants, les agents conservateurs, les agents stabilisants, des agents filmogènes, les véhicules en particulier les solvants comme l'eau et les alcools inférieurs, les huiles d'origine minérale, végétale ou animale, les résines, les cires, le colophane, les latex, les gommes telles que la gomme arabique, les agents anti-mousses, et les agents adhésifs.

Selon un aspect préféré, la composition comprend un excipient choisi parmi une charge ou un diluant, un agent épaississant, un véhicule et un tensioactif.

A titre d'exemple de charge ou de diluant, on peut citer les argiles, des silicates par exemple des silicates de magnésium ou d'aluminium, le kaolin, le talc, le quartz, l'attapulgite, la montmorillonite, la bentonite, les terres les diatomées, la silice, l'alumine, la pierre ponce, la dolomite, la cellulose et ses dérivés, l'amidon et ses dérivés, et les mélanges de ceux-ci.

A titre d'exemple de véhicule, on peut citer l'eau, les alcools en particulier le butanol ou un glycol, les solvants organiques, les huiles minérales telles que l'huile de vaseline et l'huile de paraffine, les huiles végétales, par exemple l'huile de colza ou de tournesol, et leurs mélanges. L'agent tensioactif peut être un agent émulsifiant, un agent dispersant ou un agent mouillant de type ionique ou non-ionique ou un mélange de tels agents tensio-actifs. Parmi ceux-ci, on peut citer par exemple, des sels d'acides polyacryliques, des sels d'acides lignosulfoniques, des sels d'acides phénol sulfonique ou des sels d'acides naphtalène sulfonique, des polycondensats de l'oxyde d'éthylène avec des alcools gras, des acides gras ou des amines grasses, des phénols substitués (en particulier des alkylphénols), des dérivés de la taurine (en particulier des dérivés alkylés), des esters phosphoriques d'alcools ou de polycondensats de l'oxyde d'éthylène avec des phénols, des esters d'acides gras avec des polyols, ou des dérivés fonctionnels sulfates, sulfonates ou phosphates de ces composés. Les tensio-actifs comprennent également des composés tels que les alkyl polyglycosides, les sucroglycérides d'acides gras, les copolymères vinylpyrrolidone - vinylacétates, vinylpyrrolidone-méthacrylate d'éthyle, méthyl vinyl éther-anhydride maléique ou encore les phospholipides. La présence d'au moins un agent tensioactif peut être nécessaire lorsque le principe actif et/ ou la charge ne sont que faiblement soluble ou ne sont pas solubles dans le véhicule utilisé, par exemple l'eau.

Comme agent épaississant approprié, on peut citer l'hydrate d'alumine, l'hydroxyde de magnésium, les argiles du type bentonite et la silice colloïdale, l'albumine, la caséine du lait, les matières amylacées, par exemple l'amidon de maïs, les gommes végétales, par exemple la gomme arabique, la gomme xanthane et la gomme adragante, les dérivés d'amidon, les alginates, les carraghénates, les éthers cellulosiques tels que les méthyl celluloses, les carboxyméthylcelluloses, les méthyl hydroxyéthyl celluloses, les hydroxyéthyl celluloses et les hydroxypropyl méthylcelluloses, les alcools polyvinylique, les acides polyacryliques et leurs mélanges.

De préférence, la composition phytopharmaceutique comprend au moins un excipient choisi parmi les emulsifiants anioniques ou non-ioniques et les huiles minérales ou végétales.

A titre d'exemple, on peut utiliser un ou plusieurs excipients, en particulier un ou plusieurs tensioactifs, recommandés par l'ITCF (Institut Technique des Céréales et des Fourrages).

La composition phytopharmaceutique peut comprendre, en outre, un ou plusieurs agents phytosanitaires ou phytopharmaceutiques additionnels. Le ou les agents phytosanitaires ou phytopharmaceutiques additionnels peuvent être choisis parmi les agents pesticides, les bactéricides, les agents fongiques, les virucides, les régulateurs de croissance, les stimulateurs des défenses naturelles de la plante tels que les éliciteurs...

L'agent éliciteur peut être un composé tel que la laminarine, les oligogalacturonides ou la chitine.

L'agent fongicide additionnel peut être par exemple choisi parmi le fenhexamide, le fluopyram, la trifloxystrobine, la spiroxamine, l'époxiconazole, la pyraclostrobine, le mancozèbe, le cymoxanil, le fosetyl-aluminium, le folpel, le tétraconazole, le tébuconazole, le sulfate de cuivre, le chlorothalonil, le kiralaxyl, le fenpropimorphe, le cyazofamide, l'amétoctradine, le métirame, le dithianon, et le diméthomorphe

La composition phytopharmaceutique peut, de plus ou en alternative, comprendre un ou plusieurs composés choisis parmi les engrais et les agents fertilisants.

La composition phytopharmaceutique peut être préparée par des méthodes bien connues de l'homme du métier, par exemple en mélangeant un composé de formule (I) avec un ou plusieurs excipients et en option un ou plusieurs agents phytosanitaires additionnels.

La forme galénique et les excipients de la composition phytopharmaceutique dépendent de la maladie traitée et/ou du mode d'administration souhaité.

Les modes d'administration selon l'invention englobent la pulvérisation, le poudrage, l'injection dans le bois ou dans les zones de nécroses du bois, le badigeon ou l'étalement, notamment sur les plaies de taille. Il peut s'agir également d'une administration par immersion, par exemple pour le traitement du matériel de propagation et des plants. Le mode d'administration peut également reposer sur l'introduction d'un insert dans le bois ou la nécrose du bois. Le cas échéant, le composé ou la composition selon l'invention peut être administré dans l'eau d'irrigation de la plante.
A titre illustratif, une composition phytopharmaceutique peut être une solution pulvérisable comprenant de :

- 1 % à 5 % d'un composé de formule (I)
- 1% à 10 % d'un agent tensio-actif, par exemple une lécithine,
- 85 à 98% d'un véhicule de préférence de l'eau,
- en option de 1% à 20% d'un agent filmogène de préférence une huile minérale, un polysaccharide,
- en option, 0,1% à 5% d'un agent phytopharmaceutique additionnel, de préférence un agent fongicide.

Une telle solution est de préférence diluée par un facteur de 2 à 10 avant application.
La fréquence, la dose et la période d'administration du composé ou de la composition selon l'invention dépend de la maladie cryptogamique à traiter ou à prévenir ainsi que du type de plante ou de culture à traiter
A titre d'exemple, on peut estimer que la dose de composé (I) administré par traitement est comprise entre 1 g à 1 kg par ha de culture, de préférence 5 g à 1 kg par ha de culture (par exemple de culture vignes).
Pour prévenir ou traiter une maladie des parties aériennes de la plante telle que la pourriture grise, ou le black rot, la composition phytopharmaceutique selon l'invention peut être utilisée sur une culture telle qu'un verger ou un vignoble, à raison d'au moins une fois par mois, par exemple 1 fois toutes les trois semaines, 1 fois toutes les deux semaines, ou encore 1 fois par semaine. La composition phytopharmaceutique est de préférence appliquée sur les feuilles et/ou le fruit par pulvérisation. Le cycle de traitement peut débuter pendant la période de développement foliaire et se terminer au moment de la récolte des fruits ou des grappes.

Afin de prévenir les infections des plaies de taille, la culture peut être traitée avant, pendant et/ou après la taille, de préférence avant et après la taille. Par exemple, les plantes (e.g. les vignes ou les arbres fruitiers) peuvent être traitées par pulvérisation avec une composition phytopharmaceutique selon l'invention dans les 48, 24, ou les 12 heures précédant la taille, voire dans l'heure précédent la taille. Les plantes peuvent être de nouveau traitées dans les 24 heures ou les 48 heures suivant la taille, de préférence par pulvérisation ou badigeonnage d'une composition phytopharmaceutique selon l'invention. Le traitement peut être renouvelé autant de fois que nécessaire, par exemple à raison d'une fois par quinzaine.
Il est également possible d'appliquer la composition phytopharmaceutique selon l'invention simultanément à la taille, par exemple à l'aide d'un dispositif permettant à la fois de couper et de distribuer la composition phytopharmaceutique selon l'invention. Dans ce mode de réalisation, la composition phytopharmaceutique selon l'invention se présente avantageusement sous la forme d'une solution liquide ou gélifiée.

A titre d'exemple supplémentaire de mise en œuvre de l'invention, un pied de vigne présentant une nécrose, par exemple une nécrose typique de l'Esca, de l'eutypiose ou du Botryosphaeria dieback, peut être traité en appliquant directement sur la zone de nécrose la composition phytopharmaceutique selon l'invention, ladite composition pouvant se présenter sous la forme d'une pâte.

Selon un aspect supplémentaire, la présente invention a également pour objet une méthode pour traiter ou prévenir une maladie cryptogamique chez une plante, ladite méthode comprenant l'application d'un composé de formule (I) ou d'une composition phytopharmaceutique telle que définie précédemment sur au moins une partie de ladite plante. Il va s'en dire que cette méthode peut être mise en œuvre selon l'une quelconque des conditions décrites ci-avant.

La présente invention a également pour objet une méthode de désinfection du matériel de multiplication utilisé pendant la préparation des plants, ou d'un plant en sortie de pépinière, ladite méthode comprenant l'application d'un composé de formule (I) ou d'une composition phytopharmaceutique selon l'invention sur le matériel de multiplication ou le plant, de préférence par immersion.

Enfin, il est également décrit une méthode pour prévenir ou traiter la pourriture ou la moisissure des produits de récolte, ladite méthode comprenant l'application d'un composé de formule (I) ou d'une composition phytopharmaceutique telle que définie précédemment sur lesdits produits de récolte.
Cette application peut être effectuée, par exemple, par pulvérisation, avant ou pendant le conditionnement des produits de récolte.

D'autres aspects et avantages de la présente invention apparaîtront à la lecture des exemples qui suivent, qui doivent être considérés comme illustratifs et en aucun cas comme limitant la portée de l'invention.

## EXEMPLES

**Exemple 1 : *Etude de la croissance mycélienne de* N. parvum *isolat Bourgogne S-116 sur différents milieux de culture supplémentés - évaluation de l'activité biocide du sous salicylate de bismuth***

- *Protocole*

Le champignon *N. parvum Bourgogne* est cultivé sur milieu solide Potato Dextrose Agar (PDA 20 g/l) supplémenté en Citrate de Bismuth ($C_6H_7BiO_4$ - MM=398.08 g/mol), en Oxyde de Bismuth ($Bi_2O_3$ - MM=465.95 g/mol), en sous-salicylate de Bismuth ($C_7H_5BiO_4$ - MM=362.09 g/mol), en Oxyde de Cuivre (CuO - MM=79.54 g/mol - témoin « action antifongique ») ou en Oxyde d'Antimoine ($O_3Sb_2$ - MM=291.5 g/mol).

Différentes concentrations de produits ont été testées : 0 - 0,05 - 0,1 - 0,2 - 0,5 - 1 - 2 - 5 et 10 g/l soit de 0 à 125 mM selon le composé testé.

Un plug circulaire de 7 mm de diamètre de mycélium âgé de 10 jours est déposé stérilement au centre de chaque boîte de Pétri. Les boîtes de Pétri sont ensuite incubées à 25 °C dans le noir et la mesure de croissance du mycélium (en mm) est effectuée toutes les 24 heures jusqu'à saturation de la boîte témoin ne contenant aucun supplément soit 5 jours. 3 répétitions techniques et biologiques ont été effectuées lors de ce test.

- *Résultats*

La Figure 1 montre les résultats à J-1 saturation du mycélium sur les boîtes « témoin » soit après 4 jours. Ils sont exprimés en pourcentage moyen (+/- écart-type) de croissance du mycélium en comparaison avec les témoins (100 %).

Les milieux contenant l'oxyde de bismuth, le citrate de bismuth ou l'oxyde d'antimoine n'inhibent pas significativement la croissance du champignon sur le milieu de culture.

L'oxyde cuivre qui est le témoin positif de l'inhibition de croissance des champignons à un effet inhibiteur à faible dose et on observe une DL50 du champignon à partir de 5 mM. En comparaison avec ce composé chimique, le sous-salicylate de bismuth inhibe de manière significative la croissance mycélienne, avec une DL50 d'inhibition de la croissance mycélienne à partir de 14 mM lorsqu'il est ajouté au milieu de culture classique du champignon.

**Exemple 2 : *Etude de la croissance mycélienne de B. cinerea B0510 sur différents milieux de culture supplémentés - évaluation de l'activité biocide du sous salicylate de bismuth***

- *Protocole*

Ces expériences ont été réalisées dans les mêmes conditions que l'exemple 1 et que nous avons également testé l'influence de l'acide salicylique ($C_7H_6O_3$ - MM = 138.12 g/mol) dans le milieu de culture de *B. cinerea.* A noter que la saturation en mycélium des boîtes témoins a lieu au bout de 9 jours avec *B. cinerea* B0510.

- *Résultats*

La Figure 2 présente les résultats obtenus à j-1 saturation du mycélium sur les boîtes « témoin » soit après 8 jours. Ils sont exprimés en pourcentage moyen (+/- écart-type) de croissance du mycélium en comparaison avec les témoins (100 %).

Les milieux contenant l'oxyde de bismuth, le citrate de bismuth ou l'oxyde d'antimoine n'inhibent pas significativement la croissance du champignon sur le milieu de culture.

L'oxyde cuivre qui est le témoin positif de l'inhibition de croissance des champignons à un effet inhibiteur à faible dose et on observe une DL50 du champignon à partir de 5 mM. Le sous-salicylate de bismuth inhibe également le développement mycélien de *B. cinerea* avec une DL50 à partir de 20 mM.

**Exemple 3: *Etude du développement de nécroses dans les bois de vigne (V. vinifera L. cv Chardonnay) infectés par N. parvum isolat Bourgogne S-116 après traitement par bain de différents composés chimiques (14 dpi)***

- *Protocole*

Des entrenoeuds verts de *V. vinifera* L. cv Chardonnay sont percés à l'aide d'un foret de 5 mm de diamètre. Chaque entrenœud percé est ensuite immergé durant 10 minutes dans un bain d'eau (témoin négatif) ou d'oxyde de bismuth, d'acide salicylique ou de sous-salicylate de bismuth à 15 mM. Un plug de mycélium de *N. parvum* isolat

Bourgogne ou de milieu malt (contrôle) de 5 mm de diamètre est ensuite introduit dans l'entrenœud puis recouvert de parafilm. Les entrenœuds sont ensuite incubés à 25 °C dans le noir avec une humidité d'environ 70 % pendant 14 jours. Suite à ces 14 jours d'inoculation, les entrenœuds sont débarrassés de leur couche superficielle de bois puis les aires de nécroses sont calculées à l'aide du logiciel ImageJ®

Les résultats sont exprimés en pourcentage moyen (+/- écart-type) des aires de nécrose observées sur les entrenœuds. 3 répétitions biologiques comprenant chacune 7 répétitions techniques par traitement ont été effectuées lors de ce test. Un test statistique de Duncan (à $p \leq 0.05$) a été effectué afin de comparé les traitements.

- *Résultats*

La Figure 3 présente les résultats obtenus pour chaque bain testé. De manière notable, le traitement à l'acide salicylique à 15 mM n'inhibe pas significativement le développement des nécroses sur les entrenoeuds inoculés. Le traitement à l'oxyde de bismuth diminue de seulement 5 % l'aire des nécroses. En revanche, le pré-traitement au sous-salicylate de bismuth à 15 mM permet de prévenir de manière significative le développement des nécroses par rapport aux échantillons témoins, puisque l'on observe une diminution de la surface des lésions nécrotiquesde presque 50 %.

Un pré-traitement des entrenoeuds par bain de 10 minutes dans du sous-salicylate de bismuth à 15 mM inhibe donc considérablement et significativement la croissance du champignon dans les bois et donc la formation de nécroses.

**Exemple 4: *Evaluation de la phytotoxicité du sous-salicylate de bismuth sur des amas cellulaires de vigne (V. vinifera L. cv Chardonnay)***

- *Protocole*

Les cals (ou amas de cellules indifférenciées) de *V. vinifera* cv. Chardonnay sont obtenus à partir d'anthères comme décrit dans Mauro et al. (1986) et dans Bertsch et al. (2005).

Tous les cals sont repiqués sur milieu MPM1 solide (Perrin et al. 2004) frais toutes les 3 semaines et incubés à 25 ± 0.5 °C dans le noir avec une humidité relative de 70 ± 10 %.

Pour cette expérience nous avons supplémenté le milieu de culture des cals avec du sous-salicylate de bismuth, de l'oxyde de bismuth ou de l'acide salicylique à 0, 5 ou 10 mM.

Cette expérience a été répétée 3 fois. Pour chaque condition, 15 cals blanc-jaunes, avec un diamètre de 10 ± 2 mm, ont été utilisés.

La croissance des cals sur chaque condition testée est évaluée chaque jour par pesée durant 5 jours. Les moyennes des résultats obtenus ainsi que les écart-types ont fait l'objet d'un test statistique de Duncan (à $p \leq 0.05$). En complément des pesées nous évaluons visuellement l'aspect et la couleur des cals suivant leur milieu de culture durant 2 mois.

- *Résultats*

Les résultats après 5 jours de culture indiquent qu'il n'y a ni inhibition ni augmentation significative de la croissance des cals sur les différents milieux de culture testés.

En ce qui concerne l'aspect et la couleur des cals il n'y a pas de changement sur les milieux supplémentés en oxyde de bismuth à 5 et 10 mM. Nous observons une légère coloration grisâtre en périphérie des cals mais aucune nécrose n'est constatée sur les milieux supplémentés avec le sous-salicylate de bismuth ou l'acide salicylique à 5 ou 10 mM. Après 2 semaines de culture ces cals présentent des zones de multiplication cellulaire de couleur normale (blanc-jaunâtre) y compris à partir des zones présentant une couleur grisâtre après 5 jours de culture.

Après 3 semaines de culture sur milieu MPM1 supplémentés les cals sont repiqués sur du milieu MPM1 vierge frais. Ils présentent un aspect, une couleur et une croissance similaires à ceux des témoins et reprennent tous une couleur blanc-jaunâtre après 2 mois d'expérimentation. L'ajout du sous-salicylate de bismuth n'a donc aucun impact en termes de croissance, de multiplication ou d'aspect nécrotique sur des cellules de vigne.

**Exemple 5: *Induction des gènes de défense de la plante par le sous-salicylate de bismuth et l'acide salicylique sur des amas cellulaires de vigne (V. vinifera L. cv Chardonnay)***

- *Protocole*

Les cals de l'exemple 4 sont prélevés après 4 jours de culture sur milieu MPM1 vierge (témoin) ou supplémenté en acide salicylique 10 mM ou sous-salicylate de bismuth 10 mM, afin d'être utilisés pour des analyses moléculaires par qRT-PCR comme décrit dans Ramirez-Suero et al. (2014). 3 cals sont prélevés par condition pour chaque expérience.

Une fois l'ARN extrait de ces cals et leur ADNc synthétisé, nous avons effectués des analyses par qRT-PCR en accord avec les conditions décrites dans Bénard-Gellon et al. (2014), afin d'observer l'expression de 2 gènes spécifiques de la voie de l'acide salicylique : *VvPR1* (teméparture d'acquisition = 83 °C) et *VvEDS1* (température d'acquisition = 77 °C). 3 répétitions techniques et biologiques sont effectuées pour chaque échantillon et chaque gènes testés. Les gènes *VvACT* et *VvEF1-Cs* sont utilisés en tant que gènes de reference afin de normaliser nos résultats. Nous considèrerons que les gènes sont surexprimés lorsque le ratio d'induction des gènes sera ≥ 4. Les valeurs moyennes d'expression et les écart-types sont calculés conformément à la procédure de Hellemans et al. (2007). Des tests de Duncan (à p ≤ 0.05 - Duncan 1955) et des analyses multifactorielles ANOVA (StatgraphicPlus®-Manugistics, Inc., Maryland, USA) sont effectuées pour comparer l'expression des genes sur chaque milieu de culture.

- *Résultats*

Les résultats sont présentés à la Figure 4. Les analyses moléculaires par qRT-PCR indiquent que les cals cultivés sur un milieu supplémenté en acide salicylique à 10 mM ou en sous-salicylate de bismuth surexpriment les gènes *VvPR1* et *VvEDS1*. De manière remarquable, ces études de l'expression des gènes de défense montrent que le sous-salicylate de bismuth induit une surexpression des gènes caractéristiques de la voie de l'acide salicylique au niveau des cellules ayant été en contact avec ce produit et que cette surexpression génique est supérieure à celle observée avec l'acide salicylique.

**Exemple 6 : évaluation de l'activité biocide du sous-salicylate de bismuth sur un panel de 8 champignons modèles (comparatif)**

L'activité biocide du sous-salicylate de bismuth a été évaluée sur 8 champignons modèles supplémentaires, à savoir :

- *Alternaria alternata:* microorganisme modèle de l'alternariose (ou brûlure alternarienne).
- *Fusarium graminearum :* microorganisme modèle de la fusariose,
- *Septoria tritici* : microorganisme responsable de la septoriose du blé
- *Verticillium dahliae:* microorganisme modèle de la verticilliose,
- *Magnaporthe grisea:* microorganisme modèle de la pyriculariose
- *Monilia laxa:* microorganisme modèle de la moniliose
- *Penicilium digitatum* : agent responsable de la pourriture des fruits, notamment des agrumes (pourriture verte)
- *Black aspergilli (Aspergillus niger)* : microorganisme responsable de l'apparition de moisissure noire sur les fruits et les légumes.

L'activité biocide du composé a été également re-testé sur *Botrytis cinerea.*

Les tests d'activité ont été réalisés sur boites de Pétri en milieu gélose sauf pour *Septoria tritici* où une technique dite sur «micro-cupule » a été utilisée. L'activité biocide du sous-salicylate de bismuth a été évaluée à 7 concentrations, à savoir 1 g/l, 3 g/l, 7 g/l, 9 g/l, 10 g/l et 12,5 g/l. A cette fin, une solution mère aqueuse comprenant 50 g/ml de composé, 1% (v/v) de MES à 10 mM, pH 6 et 3% (v/v) de DMSO a été préparée.

Test en boites de Pétri

Le protocole suivant a été réalisé:
Le sous-salicylate de bismuth a été intégré dans le milieu de culture de gélose avant solidification à la concentration souhaitée. Après solidification, un insert fongique ou un confetti préalablement immergé dans une suspension de spores a été déposé au centre de chaque boîte de Pétri, en condition stérile. Les boîtes de Pétri ont été incubées dans une enceinte microbiologique à 21 °C. La croissance mycélienne (diamètre en cm) a été réalisée jusqu'à saturation des boites de Pétri « témoins ». Chaque expérience a été réalisée en triplicat. Les valeurs moyennes de diamètre ont été calculées pour chaque expérience, y compris pour l'expérience témoin, c'est-à-dire réalisée en l'absence de sous-salicylate de bismuth. L'efficacité en pourcentage du composé à une concentration donnée a été déterminée selon la formule suivante :

$$efficacité = \frac{Moy(diamètre\ témoin) - Moy(diamètre\ en\ présence\ composé)}{Moy(diamètre\ témoin)} \times 100$$

Une efficacité de 100% signifie que le composé a inhibé complétement la croissance mycélienne.

Les résultats obtenus sont présentés dans le tableau 1 ci-dessous :

Tableau 1 : efficacité du sous-sacyate de bismuth en fonction de la concentration et de l'espèce cryptogamique.

| | Concentration du sous-salicylate de bismuth en g/l | | | | | | |
|---|---|---|---|---|---|---|---|
| Champignons phytopathogènes | 1 | 3 | 5 | 7 | 9 | 10 | 12,5 |
| *Magnaporthe grisea* | 0% | 0% | 100% | 100% | 100% | 100% | 100% |
| *Verticillium dahliae* | 0% | 0% | 0 | 100% | 100% | 100% | 100% |
| *Pénicillium digitatum* | 0 | 0% | 100% | 100% | 100% | 100% | 100% |
| *Black aspergilli* | 0% | 0% | 0% | 36 | 100% | 100% | 100% |
| *Botrytis cinerea* | 0% | 39% | 100% | 100% | 100% | 100% | 100% |
| *Alternaria alternata* | 32 | 100% | 100% | 100% | 100% | 100% | 100% |
| *Fusarium graminearum* | 0% | 100% | 100% | 100% | 100% | 100% | 100% |
| *Monilia laxa* | 0% | 0% | 100% | 100% | 100% | 100% | 100% |

Les résultats illustrés dans le tableau ci-dessus montre que le sous-salicylate de bismuth est capable de bloquer totalement la croissance mycélienne chez tous les phytopathogènes testés, à une concentration de 9 g/l. Cet effet d'inhibition est même observable pour une concentration de 3 g/l vis-à-vis d'*Alternaria alternata* et *Fusarium graminearum.*

Test en micro-cupules

L'activité biocide du sous-salicylate de bismuth a également été testée sur *Septoria tricitii* par un test en micro-cupule. Le protocole suivant a été réalisé :
Le sous-salicylate de bismuth a été intégré dans le milieu de culture. Le milieu a été ensuite inoculé par une suspension de spores de Septoria tricitii. Les micro-cupules ont été incubées dans une enceinte microbiologique à 21 °C. Chaque expérience a été réalisée trois fois. Pour chaque micro-cupule, le nombre de colonies formées (UFC) a été déterminé. Les valeurs moyennes d'UFC ont été calculées pour chaque expérience ainsi que pour l'expérience témoin réalisée en l'absence du sous-salicylate de bismuth. Le pourcentage d'efficacité du composé à une concentration donnée a été déterminé selon la formule suivante :

$$efficacité = \frac{Moy(UFC\ témoin) - Moy(UFC\ en\ présence\ composé)}{Moy(UFC\ témoin)} \times 100$$

Une efficacité de 100% signifie que le composé a inhibé complétement la formation de colonie (c'est-à-dire qu'il n'y a aucune colonie formée).
Les résultats sont présentés dans le tableau 2 ci-dessous :

Tableau 2 : Efficacité du sous-salicylate de bimuth en fonction de la concentration vis-à-vis de *Septoria triticii.*

| | Concentration du sous-salicylate de bismuth en g/l | | | | | | |
|---|---|---|---|---|---|---|---|
| | 1 | 3 | 5 | 7 | 9 | 10 | 12,5 |
| *Septoria tricitii* | 0% | 0% | 100% | 100% | 100% | 100% | 100% |

On note ainsi que le sous-salicylate de bismuth inhibe totalement la formation de colonies de *Septoria tricitii* dès qu'il est présent dans le milieu à une concentration de 5 g/l.

**Exemple 7 : Evaluation de l'effet potentiel biocide du bismuth de sous-salicylate sur deux microorganismes oomycètes responsables du mildiou (comparatif).**

Des études relativement anciennes évoquent que le bismuth de sous-salicylate aurait une activité biocide vis-à-vis des oomycètes pathogènes responsables du mildiou.
Le sous-salicylate de bismuth a donc été testé sur deux oomycètes modèles, à savoir *Plasmopora viticola* et

*Phytophtora infestans,* Cette étude a été réalisée sur disques de végétal. Une solution aqueuse de sous-salicylate (concentration de 1 g/l à 12.5 g/l) a été appliquée par pulvérisation sur l'ensemble des disques de végétal, à l'aide d'un banc de pulvérisation équipé de 5 buses. Le volume d'application a été de 200 L/ha. La pulvérisation a été renouvelée une fois. Chaque expérience a été réalisée en duplicat sur 20 disques foliaires. Après la période d'incubation (généralement 8 jours), une notation de la colonisation et de la sporulation de l'oomycète est réalisée sous une loupe binoculaire. La surface des disques de feuille colonisée par l'oomycète et l'intensité de la sporulation conduisent à l'attribution d'une note sur une échelle de 0 à 10. Une moyenne des dégâts sur les dix disques a été calculée et a permis d'obtenir l'efficacité de la modalité par rapport aux disques non traités. La formule de calcul appliquée est : (Efficacité de la dose d) = {[(T-D)/T]*100} où, T est la note moyenne d'attaque sur les 10 disques témoins, et D celle observée sur les disques traités à la dose d. Les pourcentages d'efficacité du sous-salicylate de bismuth sont les suivants (tableau 3) :

| | Concentration du sous-salicylate de bismuth en g/l | | | | | | |
|---|---|---|---|---|---|---|---|
| Oomycètes | 1 | 3 | 5 | 7 | 9 | 10 | 12,5 |
| *Plasmapora viticola* | 0% | 0% | 0% | 0% | 0% | 22,5% | 37,5% |
| *Phytophtora infestans* | 0% | 0% | 0% | 0% | 5,0% | 2,5% | 6,3% |

Il ressort de ces résultats que l'activité biocide du sous-salicylate de bismuth est très faible, voire négligeable vis-à-vis des oomycètes responsables du mildiou. L'action biocide du sous-salicylate de bismuth est donc spécifique aux champignons phytopathogènes.

**Références bibliographiques citées dans la partie expérimentale :**

Bénard-Gellon M, Farine S, Goddard ML, Schmitt M, Stempien E, Pensec F, Laloue H, Mazet-Kieffer F, Fontaine F, Larignon P, ChongJ, Tarnus C, Bertsch C (2014) Toxicity of extracellular proteins from Diplodia seriata and Neofusicoccum parvum involved in grapevine botryosphaeria dieback. Protoplasma doi: 10.1007/s00709-014-0716-y.

Bertsch C, Kieffer F, Maillot P, Farine S, Butterlin G, Merdinoglu D, Walter B (2005) Genetic chimerism of Vitis vinifera cv. Chardonnay 96 is maintained through organogenesis but not somatic embryogenesis. BMC Plant Biology 5:20.

Hellemans J, Mortier G, De Paepe A, Speleman F, Vandesompele J (2007) qBase relative quantification framework and software for management and automated analysis of real-time quantitative PCR data. Genome Biol 8 (2): R19.

Mauro M, Nef C, Fallot J (1986) Stimulation of somatic embryogenesis and plant regeneration from anther culture of Vitis vinifera cv. Cabernet-Sauvignon. Plant Cell Reports 5:377-380.

Perrin M, Gertz C, Masson JE (2004) High efficiency of regenerable embryogenic callus from anther filaments of 19-grapevine genotypes grown worldwide. Plant Science 167:1343-1349.

Ramirez-Suero M, Bénard-Gellon M, Chong J, Laloue H, Stempien E, Abou-Mansour E, Fontaine F, Larignon P, Mazet-Kieffer F, Farine S, Bertsch C (2014) Extracellular compounds produced by fungi associated with Botryosphaeria dieback induce differential defence gene expression patterns and necrosis in Vitis vinifera cv. Chardonnay cells. Protoplasma. doi: 10.1007/s00709-014-0643-y.

Bertsch C, Ramírez-Suero M, Magnin-Robert M, Larignon P, Chong J, Abou-Mansour E, Spagnolo A, Clément C, Fontaine F (2013) Grapevine trunk diseases: complex and still poorly understood. Plant Pathology 62:243-265.

Andolfi A, Mugnai L, Luque J, Surico G, Cimmino A, Evidente A (2011) Phytotoxins produced by fungi associated with grapevine trunk diseases. Toxins 3:1569-1605.

Urbez-Torres JR (2011) The status of Botryosphaeriaceae species infecting grpaevines. Phytopathol. Mediterr. 50 S5-S45


**Revendications**

1. Utilisation d'un composé de formule (I)

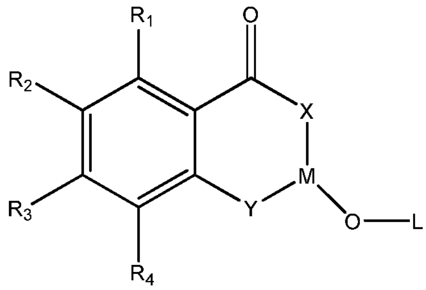

dans laquelle

- $R_1$, $R_2$, $R_3$ et $R_4$ sont indépendamment choisis parmi le groupe constitué par un hydrogène, un halogène, de préférence -Cl, -Br ou -F, -OH, -O(CO)$CH_3$, un alcoxy en $C_1$-$C_6$, un alkyle en $C_1$-$C_6$, -$NH_2$, et -CN,
- X et Y sont indépendamment l'un de l'autre O, S ou $NR_5$,
- M est Bi,
- L est H, ou un motif de vectorisation comprenant de 1 à 40 atomes de carbone et
- Chaque groupe $R_5$ est indépendamment H ou un alkyle en $C_1$-$C_6$,

ou l'un de ses sels, en tant qu'agent phytopharmaceutique pour traiter ou prévenir une maladie cryptogamique se développant au niveau du bois d'une plante, ladite maladie cryptogamique étant associée ou causée par un ou plusieurs champignons phytopathogènes choisis parmi les basidiomycètes parasitaires et les ascomycètes parasitaires.

2. Utilisation selon la revendication 1 dans laquelle le composé de formule (I) est **caractérisé en ce que** :

- $R_1$ et $R_3$ sont -H,
- $R_2$ et $R_4$ sont indépendamment choisis parmi -H, -Cl, et -F
- X et Y sont O
- M est Bi, et
- L est H, un hydroxy-alkyle en $C_1$-$C_6$, ou -($CH_2$-$CH_2$-O)$_n$-$CH_2$-$CH_2$-OH où n est un entier allant de 1 à 19, de préférence de 1 à 10.

3. Utilisation selon la revendication 1 ou 2 dans laquelle le composé de formule (I) est le sous-salicylate de bismuth:

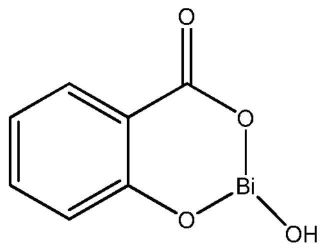

4. Utilisation selon l'une quelconque des revendications 1 à 3, dans laquelle la plante est une plante ligneuse choisie parmi le groupe constitué par les arbres fruitiers, les arbres forestiers, les arbres et arbustes ornementaux et les arbres et arbustes horticoles.

5. Utilisation selon l'une quelconque des revendications 1 à 4, dans laquelle ladite maladie cryptogamique est une maladie du bois de la vigne.

6. Utilisation selon l'une quelconque des revendications 1 à 5 dans laquelle ladite maladie cryptogamique est une maladie cryptogamique du bois associée un ou plusieurs pathogènes choisis parmi les pathogènes appartenant à la famille des *Botryosphaeriaceae,* au genre *Eutypa,* au genre *Phaeomoniella,* au genre *Phaeoacremonium,* au genre *Formitoporia,* au genre *Verticillium,* au genre *Stereum* ou au genre *Phomopsis.*

7. Utilisation selon la revendication 6 dans laquelle ladite maladie cryptogamique est associée à un pathogène choisi

dans le groupe constitué par *Phaeomoniella chlamydospora, Phaeoacremonium aleophilum, Eutypa lata, Fomitiporia mediterranea, Fomitiporia punctata, Botryosphaeria stevensii, Diplodia seriata, Neofusicoccum parvum, Stereum hirsutum* et *Verticillium longisporum.*

**8.** Utilisation selon l'une quelconque des revendications 1 à 7, dans laquelle ladite maladie cryptogamique est choisie dans le groupe constitué par l'esca, les Botrysphaeria dieback, en particulier le Black Dead Arm, le dépérissement à *Diplodia* ou le chancre à *Botryosphaeria,* l'eutypiose, l'anthracnose et l'excoriose.

**9.** Utilisation selon l'une quelconque des revendications 1 à 8, dans laquelle le composé de formule (I) est utilisé pour prévenir ou traiter une nécrose du bois associée à un pathogène de la famille des *Botryosphaeriaceae.*

**10.** Utilisation selon l'une quelconque des revendications 1 à 9, dans laquelle le composé de formule (I) est utilisé pour prévenir ou traiter les infections des plaies de taille.

**11.** Utilisation selon la revendication 10, dans laquelle le composé de formule (I) est administré à la plante au moment de la taille sous la forme d'une solution pulvérisable, d'une pâte, d'un gel, d'un insert ou d'une composition pouvant être badigeonnée sur les plaies de taille ou injectée dans le bois.

**12.** Utilisation selon l'une quelconque des revendications 1 à 9, dans laquelle le composé de formule (I) est utilisé pour traiter ou prévenir une maladie du bois de vigne, au moment de la préparation des plants en pépinière ou au moment ou en prévision de la taille.

**13.** Utilisation selon la revendication 12, dans laquelle le composé de formule (I) est utilisé pour désinfecter le matériel de propagation ou de multiplication tel que les porte-greffes et les greffons.

**14.** Méthode pour traiter ou prévenir une maladie cryptogamique se développant au niveau du bois et associée ou causée par un ou plusieurs champignons phytopathogènes choisis parmi les basidiomycètes parasitaires et les ascomycètes parasitaires chez une plante, ladite méthode comprenant l'application du composé de formule (I) tel que défini dans l'une quelconque des revendications 1-3 sur au moins une partie de ladite plante.

## Patentansprüche

**1.** Verwendung einer Verbindung der Formel (I)

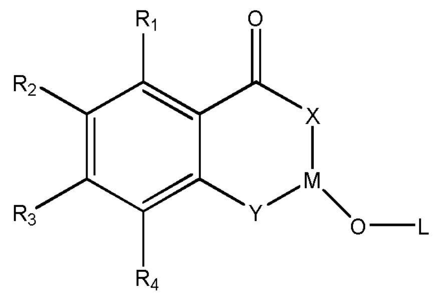

in der

- $R_1$, $R_2$, $R_3$ und $R_4$ unabhängig voneinander aus der Gruppe ausgewählt sind, bestehend aus einem Wasserstoff, einem Halogen, vorzugsweise -Cl, -Br oder -F, -OH, -O(CO)$CH_3$, einem $C_1$-$C_6$-Alkoxy, einem $C_1$-$C_6$-Alkyl, -$NH_2$ und -CN,
- X und Y unabhängig voneinander O, S oder $NR_5$ sind,
- M Bi ist,
- L H oder eine Vektorisierungskomponente ist, umfassend 1 bis 40 Kohlenstoffatome, und
- Jede Gruppe $R_5$ unabhängig voneinander H oder ein $C_1$-$C_6$-Alkyl ist,

oder eines ihrer Salze als Phytopharmazeutikum zur Behandlung oder Prävention einer Pilzkrankheit, die sich auf dem Holz einer Pflanze entwickelt, wobei besagte Pilzkrankheit mit oder von einem oder mehreren phytopathogenen

Pilzen, ausgewählt aus parasitären Basidiomyceten und parasitären Ascomyceten, assoziiert oder verursacht ist.

2. Verwendung gemäß Anspruch 1, wobei die Verbindung der Formel (I) **dadurch gekennzeichnet ist, dass**:

   - $R_1$ und $R_3$ -H sind,
   - $R_2$ und $R_4$ unabhängig voneinander aus -H, -Cl und -F ausgewählt sind,
   - X und Y O sind,
   - M Bi ist, und
   - L H, ein $C_1$-$C_6$-Hydroxyalkyl oder $-(CH_2-CH_2-O)_n-CH_2-CH_2-OH$ ist, wo n eine ganze Zahl von 1 bis 19, vorzugsweise 1 bis 10 ist.

3. Verwendung gemäß Anspruch 1 oder 2, wobei die Verbindung der Formel (I) Bismutsubsalicylat ist:

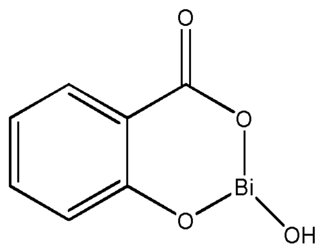

4. Verwendung gemäß einem der Ansprüche 1 bis 3, wobei die Pflanze eine Holzpflanze ist, ausgewählt aus der Gruppe, bestehend aus Obstbäumen, Waldbäumen, Zierbäumen und - sträuchern, Gartenbäumen und -sträuchern.

5. Verwendung gemäß einem der Ansprüche 1 bis 4, wobei besagte Pilzkrankheit eine Holzkrankheit der Weinrebe ist.

6. Verwendung gemäß einem der Ansprüche 1 bis 5, wobei besagte Pilzkrankheit eine Pilzkrankheit des Holzes ist, assoziiert mit einem oder mehreren Pathogenen, ausgewählt aus den Pathogenen, die zur Familie der *Botryosphaeriaceae,* zur Gattung *Eutypa,* zur Gattung *Phaeomoniella,* zur Gattung *Phaeoacremonium,* zur Gattung *Formitoporia,* zur Gattung *Verticillium,* zur Gattung *Stereum* oder zur Gattung *Phomopsis* gehören.

7. Verwendung gemäß Anspruch 6, wobei besagte Pilzkrankheit mit einem Pathogen assoziiert ist, ausgewählt aus der Gruppe, bestehend aus *Phaeomoniella chlamydospora, Phaeoacremonium aleophilium, Eutypa lata, Fomitiporia mediterranea, Fomitiporia punctata, Botryosphaeria stevensii, Diplodia seriata, Neofusicoccum parvum, Stereum hirsutum* und *Verticillium longisporum.*

8. Verwendung gemäß einem der Ansprüche 1 bis 7, wobei besagte Pilzkrankheit aus der Gruppe ausgewählt ist, bestehend aus Esca, Botrysphaeria Dieback, insbesondere Black Dead Arm, *Diplodia* Absterben oder *Botryosphaeria* Baumkrebs, Eutypiose, Anthraknose und Exkoriose.

9. Verwendung gemäß einem der Ansprüche 1 bis 8, wobei die Verbindung der Formel (I) zur Prävention oder Behandlung einer Holznekrose verwendet wird, die mit einem Pathogen der Familie der *Botryosphaeriaceae* assoziiert ist.

10. Verwendung gemäß einem der Ansprüche 1 bis 9, wobei die Verbindung der Formel (I) zur Prävention oder Behandlung von Schnittwunden-Infektionen verwendet wird.

11. Verwendung gemäß Anspruch 10, wobei die Verbindung der Formel (I) der Pflanze zum Zeitpunkt des Schnitts in Form einer sprühbaren Lösung, einer Paste, eines Gels, eines Inserts oder einer Zusammensetzung verabreicht wird, die/das auf die Schnittwunden aufgetragen oder in das Holz injiziert werden kann.

12. Verwendung gemäß einem der Ansprüche 1 bis 9, wobei die Verbindung der Formel (I) zur Prävention oder Behandlung einer Holzkrankheit der Weinrebe zum Zeitpunkt der Präparation der Pflanze in der Baumschule oder zum Zeitpunkt oder in Erwartung des Schnitts verwendet wird.

13. Verwendung gemäß Anspruch 12, wobei die Verbindung der Formel (I) zur Desinfektion von Fortpflanzungsmaterial oder Vermehrungsmaterial wie Veredelungsunterlagen und Propfreiser verwendet wird.

**14.** Verfahren zur Behandlung oder Prävention einer Pilzkrankheit, die sich im Holz entwickelt und mit oder von einem oder mehreren phytopathogenen Pilzen, ausgewählt aus parasitären Basidiomyceten und parasitären Ascomyceten bei einer Pflanze, assoziiert oder verursacht ist, wobei besagtes Verfahren das Auftragen der Verbindung der Formel (I), wie in einem der Ansprüche 1 bis 3 definiert, auf wenigstens einen Teil besagter Pflanze umfasst.

## Claims

**1.** Use of a compound of formula (I)

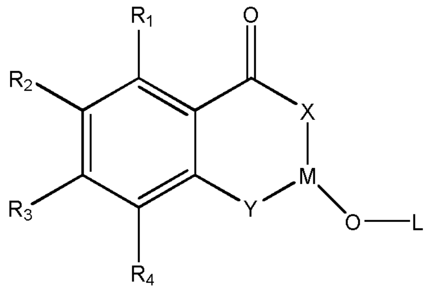

wherein

- $R_1$, $R_2$, $R_3$ and $R_4$ are independently selected from the group consisting of a hydrogen, a halogen, preferably -Cl, -Br or -F, -OH, $-O(CO)CH_3$, a $C_1$-$C_6$ alkoxy, a $C_1$-$C_6$ alkyl, - $NH_2$ and -CN,
- X and Y are independently of each other O, S or $NR_5$,
- M is Bi,
- L is H or a vectorization moiety comprising from 1 to 40 carbon atoms, and
- each $R_5$ group is independently H or a $C_1$-$C_6$ alkyl,

or a salt thereof, as a phytopharmaceutical agent for treating or preventing a fungal disease developing in the wood of a plant, said fungal disease being associated with or caused by one or more phytopathogenic fungi selected from the parasitic basidiomycetes and the parasitic ascomycetes.

**2.** Use according to claim 1 wherein the compound of formula (I) is **characterized in that**:

- $R_1$ and $R_3$ are -H,
- $R_2$ and $R_4$ are independently selected from -H, -Cl and -F,
- X and Y are O,
- M is Bi, and
- L is H, a $C_1$-$C_6$ hydroxyalkyl, or $-(CH_2-CH_2-O)_n-CH_2-CH_2-OH$ where n is an integer ranging from 1 to 19, preferably from 1 to 10.

**3.** Use according to any one of the preceding claims wherein the compound of formula (I) is bismuth subsalicylate:

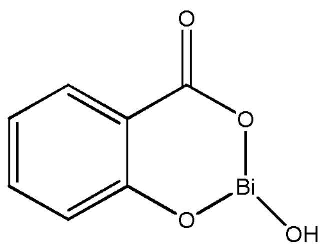

**4.** Use according to any one of claims 1-3, wherein the plant is a woody plant selected from the group consisting of fruit trees, forest trees, ornamental trees and shrubs, and horticultural trees and shrubs.

**5.** Use according to any one of claims 1-4, wherein the fungal disease is a wood disease of grapevine.

6. Use according to any one of claims 1-5 wherein the fungal disease is a fungal disease of wood caused or associated with one or several pathogens selected from pathogens belonging to *Botryosphaeriaceae* family, *Eutypa* genus, *Phaeomoniella* genus, *Phaeoacremonium* genus, *Formitoporia* genus, *Verticillium* genus, *Stereum* genus *or Phomopsis* genus.

7. Use according to claim 6 wherein the fungal disease is associated with a pathogen selected from the group consisting of *Phaeomoniella chlamydospora, Phaeoacremonium aleophilum, Eutypa lata, Fomitiporia mediterranea, Fomitiporia punctata, Botryosphaeria stevensii, Diplodia seriata, Neofusicoccum parvum, Stereum hirsutum* et *Verticillium longisporum.*

8. Use according to any one of claims 1-7 wherein the fungal disease is selected from the group consisting of esca, Botrysphaeria dieback, in particular black dead arm, *Diplodia*-cane dieback or *Botryosphaeria* canker, Eutypa dieback, anthracnose and dead-arm disease.

9. Use according to any one of claims 1-8, wherein the compound of formula (I) is used for treating or preventing a wood necrosis associated with a pathogen from *Botryosphaeriaceae* family.

10. Use according to any one of claims 1-9, wherein the compound of formula (I) is used for preventing or treating infections of pruning wounds.

11. Use according to claim 10, wherein the compound of formula (I) is administered to the plant at the time of pruning, in the form of a sprayable solution, a paste, a gel, an insert or a composition that can be brushed directly on the pruning wounds or injected into the wood.

12. Use according to any one of claims 1-9, wherein the compound of formula (I) is used for treating or preventing a wood disease of grapevine, during the preparation of seedlings, or at the time of or preparatory to pruning.

13. Use according to claim 12, wherein the compound of formula (I) is used for disinfecting propagation or multiplication material such as rootstocks and grafts.

14. A method for treating or preventing a fungal disease developing in the wood and associated with or caused by one or several phytopathogenic fungi selected from the parasitic basidiomycetes and the parasitic ascomycetes in a plant, said method comprising applying the compound of formula (I) as defined in any one of claims 1-3 on at least a part of said plant.

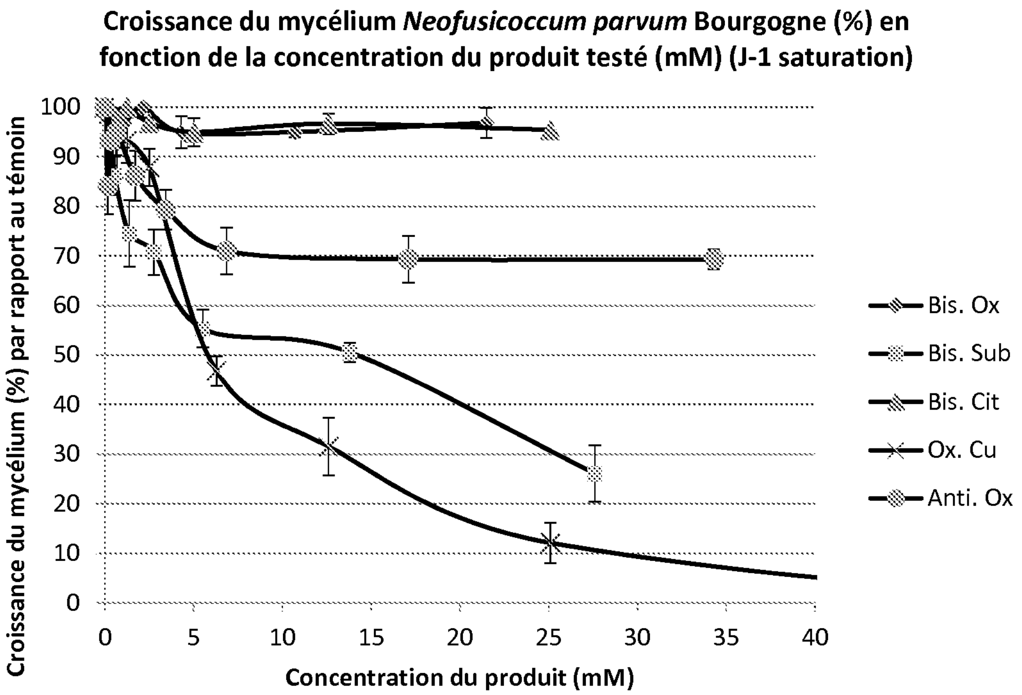


**Figure 1**

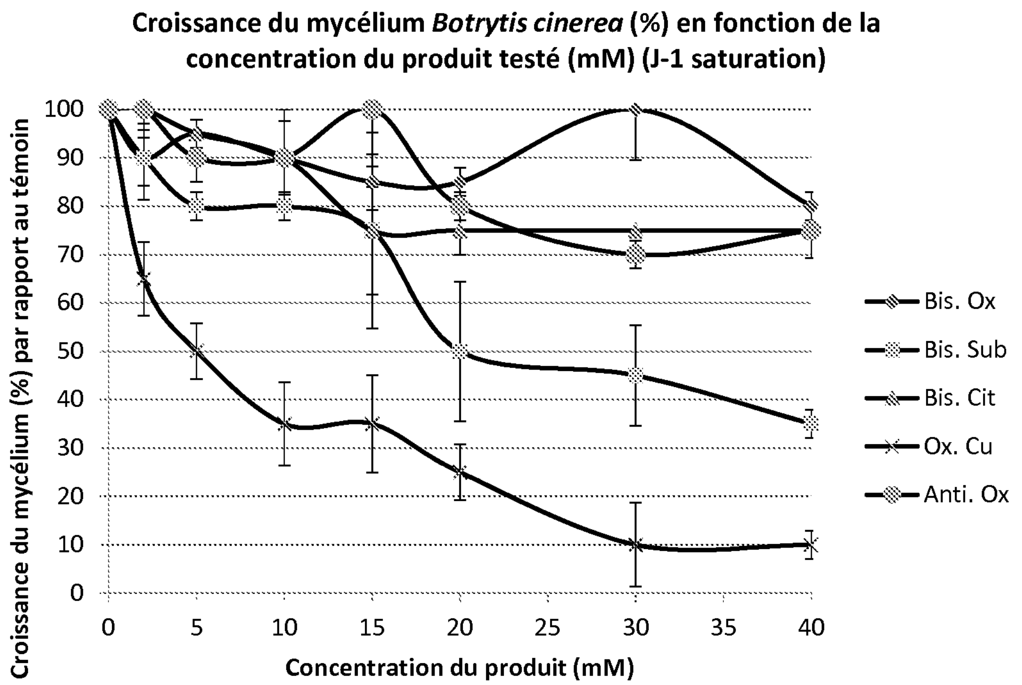


**Figure 2**

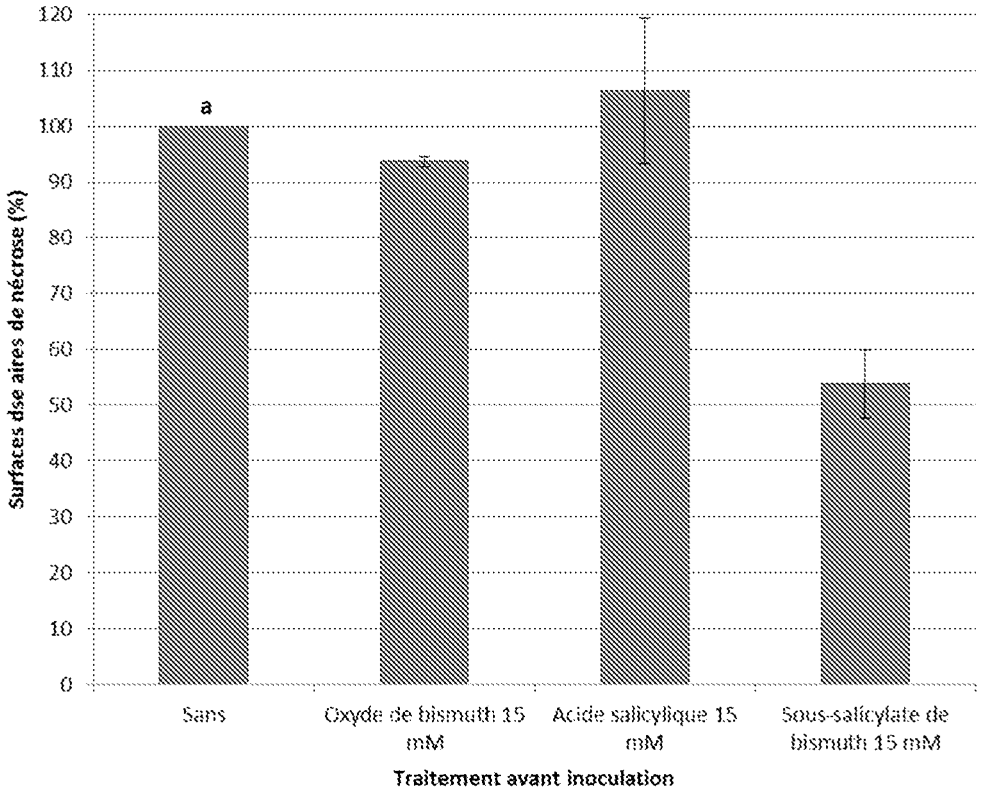


**Figure 3**

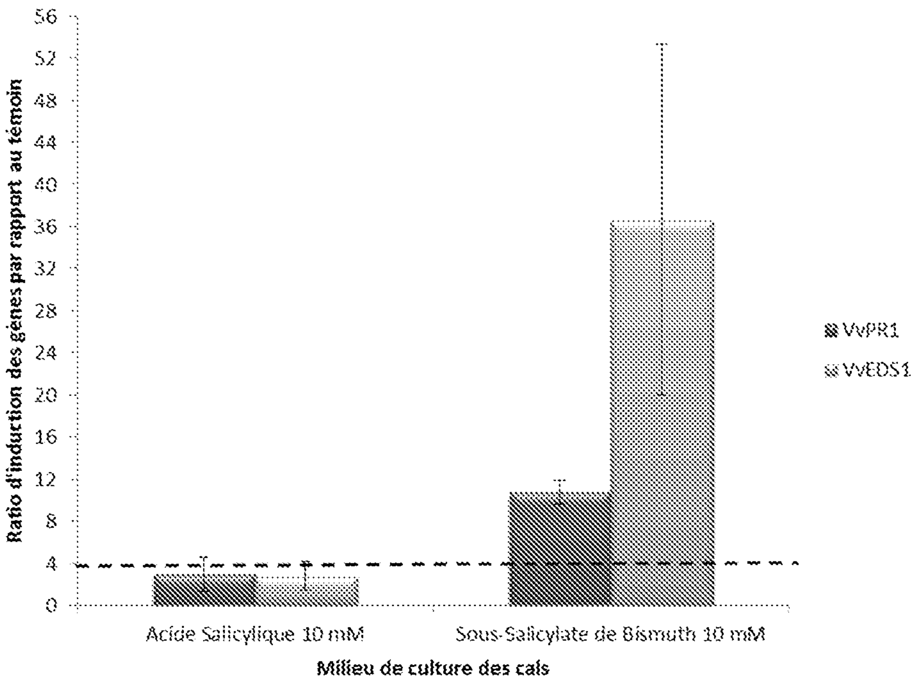


**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **BERTSCH et al.** *Plant Pathology,* 2013, vol. 62, 243-265
- **DANA et al.** *Plant Disease Reporter,* 1950, vol. 34, 8-14
- **CLAYTON et al.** *Journal of Agricultural Research,* 1943, vol. 66, 261
- **URBEZ-TORRES.** *Phytopathol. Mediterr.,* 2011, vol. 50, S5-S45
- **TIMAKOVA et al.** *Chemistry for Sustainable Development,* 2009, 305-313
- **BERTSCH et al.** *Plant Pathology,* 2013, 1-23
- **BÉNARD-GELLON M ; FARINE S ; GODDARD ML ; SCHMITT M ; STEMPIEN E ; PENSEC F ; LALOUE H ; MAZET-KIEFFER F ; FONTAINE F ; LARIGNON P.** Toxicity of extracellular proteins from Diplodia seriata and Neofusicoccum parvum involved in grapevine botryosphaeria dieback. *Protoplasma,* 2014
- **BERTSCH C ; KIEFFER F ; MAILLOT P ; FARINE S ; BUTTERLIN G ; MERDINOGLU D ; WALTER B.** Genetic chimerism of Vitis vinifera cv. Chardonnay 96 is maintained through organogenesis but not somatic embryogenesis. *BMC Plant Biology,* 2005, vol. 5, 20
- **HELLEMANS J ; MORTIER G ; DE PAEPE A ; SPELEMAN F ; VANDESOMPELE J.** qBase relative quantification framework and software for management and automated analysis of real-time quantitative PCR data. *Genome Biol,* 2007, vol. 8 (2), R19
- **MAURO M ; NEF C ; FALLOT J.** Stimulation of somatic embryogenesis and plant regeneration from anther culture of Vitis vinifera cv. Cabernet-Sauvignon. *Plant Cell Reports,* 1986, vol. 5, 377-380
- **PERRIN M ; GERTZ C ; MASSON JE.** High efficiency of regenerable embryogenic callus from anther filaments of 19-grapevine genotypes grown worldwide. *Plant Science,* 2004, vol. 167, 1343-1349
- **RAMIREZ-SUERO M ; BÉNARD-GELLON M ; CHONG J ; LALOUE H ; STEMPIEN E ; ABOU-MANSOUR E ; FONTAINE F ; LARIGNON P ; MAZET-KIEFFER F ; FARINE S.** Extracellular compounds produced by fungi associated with Botryosphaeria dieback induce differential defence gene expression patterns and necrosis in Vitis vinifera cv. Chardonnay cells. *Protoplasma,* 2014
- **BERTSCH C ; RAMÍREZ-SUERO M ; MAGNIN-ROBERT M ; LARIGNON P ; CHONG J ; ABOU-MANSOUR E ; SPAGNOLO A ; CLÉMENT C ; FONTAINE F.** Grapevine trunk diseases: complex and still poorly understood. *Plant Pathology,* 2013, vol. 62, 243-265
- **ANDOLFI A ; MUGNAI L ; LUQUE J ; SURICO G ; CIMMINO A ; EVIDENTE A.** Phytotoxins produced by fungi associated with grapevine trunk diseases. *Toxins,* 2011, vol. 3, 1569-1605
- **URBEZ-TORRES JR.** The status of Botryosphaeriaceae species infecting grpaevines. *Phytopathol. Mediterr.,* 2011, vol. 50, S5-S45